# EUROPÄISCHE PATENTSCHRIFT

(11) **EP 3 531 842 B1**
(45) Veröffentlichungstag und Bekanntmachung des Hinweises auf die Patenterteilung: **09.09.2020**
(21) Anmeldenummer: 17808302.8
(22) Anmeldetag: 27.10.2017
(51) Int. Cl.: A23L 2/46, A23L 3/02, C02F 1/44, B01D 35/157, B01D 61/00, B01D 61/12, B01D 61/22

(54) **PASTEURISIERUNGSANLAGE UND VERFAHREN ZUM BETREIBEN EINER PASTEURISIERUNGSANLAGE**
PASTEURIZATION PLANT AND METHOD FOR OPERATING A PASTEURIZATION PLANT
INSTALLATION DE PASTEURISATION ET PROCÉDÉ POUR FAIRE FONCTIONNER UNE INSTALLATION DE PASTEURISATION

(30) Priorität: 27.10.2016 AT 509892016
(43) Veröffentlichungstag der Anmeldung: 04.09.2019
(73) Patentinhaber: Red Bull GmbH, 5330 Fuschl am See (AT)
(72) Erfinder: DEMOULIN, Gunnar, 5026 Salzburg (AT); CONCIN, Roland, 5330 Fuschl am See (AT); RINDERER, Christian, 5330 Fuschl am See (AT)
(74) Vertreter: Burger, Hannes
(86) Internationale Anmeldenummer: PCT/AT2017/060289
(87) Internationale Veröffentlichungsnummer: WO 2018/076035

(56) Entgegenhaltungen:
- EP-A1- 2 639 203
- EP-A1- 2 799 127
- WO-A1-2016/100996
- WO-A1-2016/100997
- US-A1- 2007 295 650

## Beschreibung

Die Erfindung betrifft ein Verfahren zum Betreiben einer Pasteurisierungsanlage.

Pasteurisierungsanlagen dienen zum Haltbarmachen von Lebensmitteln durch gezielte Temperierung der Lebensmittel. Die Lebensmittel werden üblicherweise auf ein erhöhtes Temperaturniveau erhitzt und für eine bestimmte Zeitdauer auf diesem erhöhten Temperaturniveau gehalten, um lebende Mikroorganismen zu eliminieren. Praktikabel ist in vielen Fällen eine Vorgansweise, bei welcher die Lebensmittel vor der Pasteurisierung in Behältnisse abgefüllt und die Behältnisse verschlossen, und zur Temperierung bzw. Pasteurisierung der Lebensmittel eine temperierte bzw. erhitzte Behandlungsflüssigkeit auf eine Außenseite der Behältnisse appliziert. Auf diese Weise kann ein bereits lagerungs- bzw. verkaufsfertiges Produkt bereitgestellt werden.

Häufig werden sogenannte Tunnelpasteure eingesetzt, bei welchen mit Lebensmittel befüllte und verschlossenen Behältnisse durch eine oder mehrere Behandlungszonen geführt werden, und in einer jeweiligen Behandlungszone mit einer temperierten Behandlungsflüssigkeit übergossen bzw. besprüht werden. Üblicherweise wird eine wässrige Behandlungsflüssigkeit eingesetzt, welche zur Wiederverwendung zumindest teilweise in einem Kreislauf um die Behandlungszone(n) geführt wird. Dies dient einerseits zur Verringerung der Menge von allenfalls zuzuführender, frischer Behandlungsflüssigkeit bzw. Frischwasser. Andererseits kann auf diese Weise auch der zum Temperieren der Behandlungsflüssigkeit erforderliche Energieaufwand gesenkt werden.

Bei derartiger, fortwährender Wiederverwendung einer wässrigen Behandlungsflüssigkeit bzw. fortwährender Kreislaufführung von Behandlungsflüssigkeit ist nicht vermeidbar, dass mit der Zeit Verunreinigungen in die wässrige Behandlungsflüssigkeit eingetragen werden. Quellen für solche Verunreinigungen können etwa die Umgebungsluft, Kühltürme zum bedarfsweisen Abkühlen der Behandlungsflüssigkeit, Bedienpersonal, oder etwa die Behältnisse oder deren Inhalt sein. Beispielsweise können im Zuge der Herstellung der Behältnisse Verunreinigungen an der Außenseite der Behältnisse verbleiben, beispielsweise aufgrund spanabhebender Verarbeitungsschritte, etc.. Auch kann es vorkommen, dass aufgrund von geringfügig undichten Behältnissen Lebensmittelbestandteile während des Betriebs einer Pasteurisierungsanlage in die Behandlungsflüssigkeit gelangen. Undichtigkeiten treten hierbei häufig im Bereich der Verschlüsse der Behältnisse auf, zum Beispiel bei Schraubverschlüssen von Getränkeflaschen oder bei Verschlüssen von Getränkedosen. Des Weiteren kann es vorkommen, dass Behältnisse im Zuge der Behandlung oder vorher beschädigt werden oder gar bersten.

In der Vergangenheit wurden bereits Maßnahmen zur andauernden Reinigung einer wiederverwendeten Behandlungsflüssigkeit einer Pasteurisierungsanlage vorgeschlagen. Vorwiegend wurden Maßnahmen zur Reinigung vorgeschlagen, welche primär auf die Entfernung von filtrierbaren und/oder absetzbaren, partikulären Stoffe abzielen. Solche Maßnahmen betreffen hauptsächlich eine Filtration von großkörnigen Stoffen, oder deren Abtrennung durch schwerkraftunterstützte Sedimentation, wie dies zum Beispiel in der EP 2 722 089 A1 beschrieben ist. Des Weiteren wurden auch Maßnahmen vorgeschlagen, mittels welchen auch fein- bis feinstkörnige Stoffe, inklusive Mikroorganismen aus einer im Kreislauf geführten Behandlungsflüssigkeit entfernbar sind. In dieser Hinsicht können zum Beispiel gute Ergebnisse mit den in der WO 2016/100996 A1 vorgeschlagenen Maßnahmen erzielt werden, welche WO 2016/100996 A1 auf die Anmelderin zurückgeht.

Es besteht jedoch weiterhin Bedarf, verbesserte Methoden zur Reinigung einer wässrigen Behandlungsflüssigkeit in Pasteurisierungsanlagen zu entwickeln, insbesondere um eine hinsichtlich ökologischer und ökonomischer Gesichtspunkte möglichst optimierte, andauernde Reinigung einer ständig wiederverwendeten Behandlungsflüssigkeit zu erlauben. Im Speziellen besteht weiterhin Verbesserungsbedarf hinsichtlich einer möglichst gezielt gesteuerten, und damit ressourcenschonende und wirtschaftlichen Reinigung einer zur Wiederverwendung im Kreis geführten, temperierten Behandlungsflüssigkeit bei Pasteurisierungsanlagen.

Aufgabe der vorliegenden Erfindung war es daher, ein verbessertes Verfahren zum Betreiben einer Pasteurisierungsanlage zur Verfügung zu stellen, welches eine möglichst effiziente, fortwährende Reinigung einer wässrigen Behandlungsflüssigkeit erlaubt.

Diese Aufgabe wird durch ein Verfahren gemäß den Ansprüchen gelöst.

Das erfindungsgemäße Verfahren umfasst ein Transportieren von mit Lebensmitteln befüllten und verschlossenen Behältnissen durch eine oder mehrere Behandlungszone(n). Die Behältnisse werden mit einer temperierten, wässrigen Behandlungsflüssigkeit in der oder den Behandlungszone(n) durch Applizieren der Behandlungsflüssigkeit auf eine Außenseite der Behältnisse, behandelt. Hierbei wird die Behandlungsflüssigkeit aus der oder den Behandlungszone(n) zur Wiederverwendung in mindestens einem Umlaufkreislauf mittels eines Fördermittels wieder in eine Behandlungszone zurückgeführt. Pro Zeiteinheit wird eine Teilmenge eines über den mindestens einen Umlaufkreislauf geführten Volumenstromes der Behandlungsflüssigkeit zur Bildung wenigstens eines Teilstromes aus dem mindestens einen Umlaufkreislauf entnommen bzw. abgezweigt, welcher wenigstens eine Teilstrom durch eine strömungstechnisch mit dem mindestens einen Umlaufkreislauf leitungsverbundene Reinigungsvorrichtung, umfassend eine Membranfiltrationsvorrichtung mit einem oder mehreren Filtermodul(en), geführt und filtriert wird.

Es ist vorgesehen, dass eine Durchflussrate bzw. ein Volumenstrom des wenigstens einen Teilstromes durch die Membranfiltrationsvorrichtung bzw. die Reinigungsvorrichtung mittels einer Sensorvorrichtung überwacht wird. Des Weiteren ist vorgesehen, dass auf Basis der Überwachung die pro Zeiteinheit aus dem mindestens einen Umlaufkreislauf entnommene Teilmenge an Behandlungsflüssigkeit hinsichtlich einer gewünschten Durchflussrate des wenigstens einen Teilstromes durch die Membranfiltrationsvorrichtung, durch Verstellen einer Durchflussregelstellung mindestens eines verstellbaren Durchflussregulierungsmittels gegenüber der Membranfiltrationsvorrichtung, beeinflusst wird. Der wenigstens eine Teilstrom wird nach Hindurchführung durch die Reinigungsvorrichtung wieder in einen Umlaufkreislauf oder eine Behandlungszone zurückgeführt.

Durch die angegebenen Maßnahmen kann ein Verfahren bereitgestellt werden, mittels welchem in hoch wirksamer Weise fortwährend koagulierte Verunreinigungen, wie etwa Trübstoffe, Staubpartikel, Lebensmittelbestandteile, Teile von Behältnissen, Fällungsprodukte, Schleimbildungen, Algen bzw. Mikroorganismen, aus der Behandlungsflüssigkeit entfernt werden können. Im Besonderen kann durch die Überwachung und Beeinflussung der Durchflussrate durch die Membranfiltrationsvorrichtung, sichergestellt werden, dass zur erforderlichen Entfernung von Verunreinigungen fortwährend eine ausreichend große Durchflussrate des wenigstens einen Teilstromes durch die Membranfiltrationsvorrichtung bzw. die Reinigungsvorrichtung eingestellt bzw. gesteuert werden kann.

Von Vorteil ist weiterhin, dass ein zeitlich variabler Verunreinigungsgrad der Behandlungsflüssigkeit erkannt und ausgeglichen werden kann. Beispielsweise wirkt sich ein erhöhter Verunreinigungsgrad der Behandlungsflüssigkeit bei gleichbleibender Durchflussregelstellung des mindestens einen Durchflussregulierungsmittels gegenüber der Membranfiltrationsvorrichtung derart aus, dass eine Durchflussrate des wenigstens einen Teilstromes durch die Membranfiltrationsvorrichtung bzw. die Reinigungsvorrichtung sinkt. Es kann sodann die Durchflussrate des wenigstens einen Teilstromes durch die Membranfiltrationsvorrichtung, und damit die Filtrationsleistung, durch Vergrößern der Durchflussregelstellung des mindestens einen Durchflussregulierungsmittels gegenüber der Membranfiltrationsvorrichtung gesteigert werden. Bei einem niedrigen Ausmaß an Verunreinigungen in der Behandlungsflüssigkeit kann eine Verkleinerung der Durchflussregelstellung des mindestens einen Durchflussregulierungsmittels gegenüber der Membranfiltrationsvorrichtung vorgenommen werden, um die Durchflussrate des wenigstens einen Teilstromes durch die Membranfiltrationsvorrichtung zu verringern. Eine Durchflussrate bzw. ein Volumenstrom des wenigstens einen Teilstromes kann somit in effizienter Art und Weise auf ein jeweils erforderliches Niveau eingestellt werden.

Insgesamt kann durch die angegebenen Maßnahmen vorteilhafterweise eine wirksame, gezielt gesteuerte, fortwährende Reinigung der in einem oder mehreren Umlaufkreisläufen geführten Behandlungsflüssigkeit bereitgestellt werden. Bevorzugt wird der wenigstens eine Teilstrom nach Durchführung durch die Reinigungsvorrichtung wieder der Behandlungsflüssigkeit desselben Umlaufkreislaufes, aus der er abgezweigt wurde, zugeführt. Hierdurch ergibt sich der Vorteil, dass ein Temperaturniveau des wenigstens einen Teilstromes zumindest im Wesentlichen jenem Temperaturniveau der in dem Umlaufkreislauf geführten Behandlungsflüssigkeit entspricht. Eine etwaige, zusätzliche Temperierung des einer Behandlungszone zugeführten Volumenstromes der Behandlungsflüssigkeit kann daher unberücksichtigt bleiben.

Bei einer derartigen Reinigung eines Teilstromes oder mehrerer Teilströme der Behandlungsflüssigkeit ist bei Pasteurisierungsanlagen auch die ständige Durchmischung der einzelnen Volumenelemente der Behandlungsflüssigkeit aufgrund des Fließens bzw. der Zwangsförderung der Behandlungsflüssigkeit über den Umlaufkreislauf oder über die Umlaufkreisläufe von Vorteil. Eine solche Durchmischung ist zum Beispiel im Speziellen wirksam bei Pasteurisierungsanlagen, bei welchen Volumenströme der Behandlungsflüssigkeit aus Behandlungszonen abgeführt, und über Umlaufkreisläufe jeweils anderen Behandlungszonen wieder zugeführt werden. In anderen Worten ausgedrückt werden in solchen Fällen einzelne Volumenelemente der Behandlungsflüssigkeit im laufenden Betrieb mit der Zeit über wechselnde Umlaufkreisläufe geführt bzw. in und aus wechselnden Behandlungszonen zu- und abgeführt. Daher können durch fortwährende Reinigung jeweils nur einer Teilmenge der Behandlungsflüssigkeit durch Bildung der Teilströme, mit der Zeit wirksam unerwünschte Verunreinigungen aus der gesamten Behandlungsflüssigkeit entfernt werden.

Bei einer Weiterbildung des Verfahrens kann vorgesehen sein, dass eine gewünschte Durchflussrate für den wenigstens einen Teilstrom durch die Membranfiltrationsvorrichtung ausgewählt wird aus einem Bereich zwischen 0,1 % und 50 % bezogen auf den Volumenstrom der Behandlungsflüssigkeit in dem mindestens einen Umlaufkreislauf vor dem Entnehmen des Teilstromes.

Durch Auswahl der Durchflussrate aus dem angegebenen Bereich, kann jeweils eine effiziente, einem Verunreinigungsgrad der Behandlungsflüssigkeit angepasste Reinigung der Behandlungsflüssigkeit bzw. des wenigstens einen Teilstromes der Behandlungsflüssigkeit vorgenommen werden. Von Vorteil ist hierbei, dass die gesamte, in der Pasteurisierungsanlage zirkulierende Behandlungsflüssigkeit wirksam durch fortwährende Entnahme und Filtration einer verhältnismäßig geringen Teilmenge an Behandlungsflüssigkeit aus dem mindestens einen Umlaufkreislauf wirksam gereinigt werden kann. Bevorzugt wird eine gewünschte Durchflussrate für den wenigstens einen Teilstrom ausgewählt aus einem Bereich zwischen 0,5 % und 20 % bezogen auf den Volumenstrom der Behandlungsflüssigkeit in dem mindestens einen Umlaufkreislauf vor dem Entnehmen des Teilstromes. Für eine effiziente Reinigung des wenigstens einen Teilstromes kann eine Gesamtfiltrationskapazität der Membranfiltrationsvorrichtung bzw. eine Anzahl und jeweilige Filtrationskapazität des Filtermoduls oder der Filtermodule der Membranfiltrationsvorrichtung natürlich entsprechend angepasst bzw. ausgewählt sein.

Bei einer bevorzugten Ausführungsform des Verfahrens kann vorgesehen sein, dass die pro Zeiteinheit aus dem mindestens einen Umlaufkreislauf entnommenen Teilmenge an Behandlungsflüssigkeit hinsichtlich einer gewünschten Durchflussrate des wenigstens einen Teilstromes durch die Membranfiltrationsvorrichtung, durch Verstellen einer Öffnung des mindestens einen Durchflussregulierungsmittels gegenüber der Membranfiltrationsvorrichtung, beeinflusst wird.

Ein Verstellen einer Öffnung eines hierfür ausgebildeten Durchflussregulierungsmittels bringt den Vorteil, dass die Beeinflussung der Durchflussrate des wenigstens einen Teilstromes durch die Membranfiltrationsvorrichtung mit einem verhältnisweise einfachen Mittel, aber dennoch effizient und präzise vorgenommen werden kann. Vorteilshaft ist weiters, dass zusätzliche Fördermittel, etwa zusätzliche Pumpen hierbei erübrigt werden können, bzw. können jene Fördermittel, welche einen Volumenstrom der Behandlungsflüssigkeit über einen Umlaufkreislauf fördern auch zur Hindurchführung des wenigstens einen Teilstromes durch die wenigstens eine Reinigungsvorrichtung bzw. die Membranfiltrationsvorrichtung genutzt werden. Als Beispiele für Durchflussregulierungsmittel, bei welchen eine Öffnung gegenüber der Membranfiltrationsvorrichtung verstellt werden kann, können unter anderem Verstellklappen, Hubventile oder 3-Wege-Verteilventile genannt werden. In solchen Fällen kann die Durchflussrate wiederum durch Vergrößern der Öffnung, also durch Verstellen der Öffnung des Durchflussregulierungsmittels hin zu einer größeren Öffnung gegenüber der Membranfiltrationsvorrichtung, gesteigert werden. Respektive kann die Durchflussrate durch die Membranfiltrationsvorrichtung durch Verkleinern der Öffnung gegenüber der Membranfiltrationsvorrichtung verringert werden.

Von Vorteil kann auch eine Ausführungsform des Verfahrens sein, bei welchem eine Durchflussregelstellung oder Öffnungsstellung des mindestens einen verstellbaren Durchflussregulierungsmittels gegenüber der Membranfiltrationsvorrichtung fortwährend überwacht wird.

Hierdurch kann eine jeweilige Durchflussregelstellung oder Öffnung bzw. Öffnungsstellung des mindestens einen Durchflussregulierungsmittels als Überwachungs- bzw. Kontrollmittel, beispielsweise zur Detektion einer fortschreitenden Bildung einer Deckschicht an den Membranen des Filtermoduls oder der Filtermodule der Membranfiltrationsvorrichtung, genutzt werden.

In weiterer Folge kann dann vorgesehen sein, dass bei Überschreitung eines Grenzwertes für die Durchflussregelstellung oder Öffnungsstellung des mindestens einen Durchflussregulierungsmittels eine Maßnahme durchgeführt bzw. eingeleitet wird.

Durch Durchführung von Maßnahmen bei Überschreitung eines Grenzwertes für eine Durchflussregelstellung oder Öffnungsstellung, kann zum Beispiel rechtzeitig ein zu großes Absinken der Filtrationsleistung im Betrieb der Pasteurisierungsanlage hintangehalten werden. Der Grenzwert für die Durchflussregelstellung oder Öffnungsstellung kann hierbei im Prinzip frei festgelegt bzw. vordefiniert werden. Als Grenzwert kann zum Beispiel durchaus die maximal mögliche Öffnung bzw. die maximale Öffnungsstellung des mindestens einen Durchflussregulierungsmittels gewählt bzw. festgelegt sein.

Es kann aber auch vorgesehen sein, dass bei Unterschreitung eines Grenzwertes für die erfasste Durchflussrate bzw. den erfassten Volumenstrom des wenigstens einen, entnommenen Teilstromes durch die Membranfiltrationsvorrichtung eine Maßnahme durchgeführt wird.

Auch hierdurch kann zum Beispiel rechtzeitig ein zu großes Absinken der Filtrationsleistung im Betrieb der Pasteurisierungsanlage hintangehalten werden. Wiederum kann der Grenzwert für die erfasste Durchflussrate bzw. den erfassten Volumenstrom des wenigstens einen Teilstromes im Prinzip frei vordefiniert werden.

Als Maßnahme kann zum Beispiel vorgesehen sein, dass eine Rückspülung unter Umkehrung der Flussrichtung eines oder mehrerer oder aller Filtermodule der Membranfiltrationsvorrichtung durchgeführt wird.

Im Zuge der fortwährenden Filtration des wenigstens einen Teilstromes können die aus dem wenigstens einen Teilstrom entfernten bzw. herausgefilterten Stoffe auf einer Retentat-Seite in dem oder den Filtermodul(en) der Membranfiltrationsvorrichtung aufkonzentriert werden. Hierdurch können sich retentat-seitig an den Membranen des Filtermoduls oder der Filtermodule mit der Zeit Ablagerungen bilden, welche ein Durchströmen der Membranen durch die Behandlungsflüssigkeit zunehmend erschweren können. Durch eine Rückspülung des Filtermoduls oder der Filtermodule können derartige Ablagerungen wirksam von den Filtermembranen entfernt werden. Vorteilhafterweise kann hierdurch eine Durchströmung der Filtermembranen für den wenigstens einen Teilstrom wieder wesentlich verbessert werden, sodass ausreichend große Durchflussraten für den wenigstens einen Teilstrom auch bei einer geringen Durchflussregelstellung oder kleinen Öffnung des mindestens einen Durchflussregulierungsmittels gegenüber der Membranfiltrationsvorrichtung ermöglicht sind. Alternativ kann eine solche Rückspülung des Filtermoduls oder der Filtermodule der Membranfiltrationsvorrichtung aber auch zu vordefinierbaren Zeiten bzw. in bestimmten Zeitintervallen erfolgen. Im Prinzip können alle Filtermodule der Membranfiltrationsvorrichtung gleichzeitig rückgespült werden. Es kann beispielsweise aber auch vorgesehen sein, dass in sequentieller Abfolge jeweils Teilmengen der Filtermodule, oder in sequentieller Abfolge jedes Filtermodul der Membranfiltrationsvorrichtung einzeln rückgespült wird.

Bei einer Weiterbildung des Verfahrens kann vorgesehen sein, dass die Durchflussrate des entnommenen Teilstromes fortwährend mittels einer Sensorvorrichtung umfassend einen Durchflussmengensensor überwacht wird.

Hierdurch kann ein effizientes Sensormittel eingesetzt werden, mittels welchem ein Volumenstrom bzw. eine Durchflussrate durch die Membranfiltrationsvorrichtung direkt erfasst bzw. überwacht werden kann.

Es kann aber auch vorgesehen sein, dass fortwährend ein Druckverlust über die Membranfiltrationsvorrichtung mittels einer Sensorvorrichtung umfassend einen Differenzdrucksensor oder wenigstens zwei Drucksensoren überwacht wird.

Hierdurch kann mit einem verhältnismäßig kostengünstigen Sensormittel eine Durchströmbarkeit der Membranfiltrationsvorrichtung überwacht werden. Es kann auch auf eine Durchflussrate durch die Membranfiltrationsvorrichtung rückgeschlossen werden. Dies insbesondere in Zusammenhang mit einer jeweiligen Durchflussregelstellung oder Öffnungsstellung des mindestens einen Durchflussregulierungsmittels gegenüber der Membranfiltrationsanlage.

Bei einer weiteren Ausführungsform des Verfahrens kann aber auch vorgesehen sein, fortwährend mittels jeweils einer Sensorvorrichtung eine Durchflussrate der Behandlungsflüssigkeit durch einzelne Filtermodule oder Gruppen von Filtermodulen der Membranfiltrationsvorrichtung überwacht wird.

Auf diese Weise können beispielsweise Zustände von einzelnen Filtermodule oder Gruppen von Filtermodulen, beispielsweise Durchgängigkeiten bzw. Verblockungen durch Bildung von Ablagerungen, jeweils unabhängig voneinander überwacht werden. Die Durchflussraten durch die einzelnen Filtermodule oder Gruppen von Filtermodulen addieren sich hierbei zu einer gesamten Durchflussrate über die Membranfiltrationsvorrichtung.

In weiterer Folge kann auch vorgesehen sein, dass bei einer Unterschreitung eines jeweils festgelegten Grenzwertes für eine Durchflussrate durch ein einzelnes Filtermodul oder eine Gruppe von Filtermodulen, das entsprechende einzelne Filtermodul oder die entsprechende Gruppe von Filtermodulen unter Umkehrung der Flussrichtung rückgespült werden.

Von Vorteil ist hierbei, dass die einzelnen Filtermodule oder die Gruppen von Filtermodulen jeweils unabhängig voneinander rückgespült werden können, sodass Filtermodule, welche nicht rückgespült werden, weiter im Filtrationsbetrieb betrieben werden können. Außerdem kann durch diese Maßnahme einer Verblockung der Filtermembranen durch Bildung von Ablagerungen jeweils für die einzelnen Filtermodule oder Gruppen von Filtermodulen jeweils gezielt separat entgegengewirkt werden. Hierdurch kann auch vermieden werden, dass Filtermodule rückgespült werden, für welche zum Zeitpunkt der Durchführung eines Rückspülvorganges keine Rückspülung erforderlich ist.

Grundsätzlich kann auch vorgesehen sein, dass eine jeweilige Durchflussrate der Behandlungsflüssigkeit durch einzelne Filtermodule oder Gruppen von Filtermodulen, jeweils mittels eines separaten Durchflussregulierungsmittels beeinflusst werden. Hierdurch kann ein jeweiliger Volumenstrom bzw. eine jeweilige Durchflussrate durch ein Filtermodul bzw. eine Gruppe von Filtermodulen unabhängig von weiteren Filtermodulen der Membranfiltrationsvorrichtung beeinflusst werden. Die jeweiligen Durchflussraten durch die einzelnen Filtermodule addieren sich hierbei zu einer gesamten Durchflussrate des wenigstens einen, aus dem mindestens einen Umlaufkreislauf entnommenen, Teilstromes durch die Membranfiltrationsvorrichtung.

Es kann aber auch zweckmäßig sein, wenn das oder die Filtermodul(e) der Membranfiltrationsvorrichtung retentat-seitig zyklisch oder bedarfsabhängig mit einem Gasstrom beaufschlagt werden.

Eine solche Beaufschlagung mit einem Gasstrom ist retentat-seitig von Vorteil, um Partikel von den Filtermembranen des Filtermoduls oder der Filtermodule abzulösen. Hierbei können retentat-seitige Ablagerungen an den Wänden der Filtermembranen durch die eingebrachten Gasblasen aufgebrochen, und somit der Bildung einer strömungstechnisch blockierenden Deckschicht bzw. einer Verstopfung der Poren der Filtermembranen entgegengewirkt werden. Zusätzlich können die Filtermembranen durch den Gasstrom in Bewegung versetzt werden, wobei die durch die Deformation und Agitation der Filtermembranen ein Ablösen von Ablagerungen unterstützt wird. Dies zum Beispiel auch durch Reibungskräfte zwischen den einzelnen Filtermembranen.

Im Speziellen kann vorgesehen sein, dass das oder die Filtermodul(e) der Membranfiltrationsvorrichtung während eines Rückspülvorgangs retentat-seitig mit einem Gasstrom beaufschlagt werden.

Hierdurch kann im Besonderen ein Rückspülvorgang zur Entfernung von Ablagerungen an den Filtermembranen des Filtermoduls oder der Filtermodule der Membranfiltrationsvorrichtung wirksam unterstützt werden, und somit ein Rückspülvorgang wesentlich effizienter durchgeführt werden.

Bei einer bevorzugten Weiterbildung des Verfahrens kann vorgesehen sein, dass die Durchflussrate des wenigstens einen Teilstromes durch die Membranfiltrationsvorrichtung und/oder die Durchflussregelstellung oder Öffnungsstellung des mindestens einen Durchflussregulierungsmittels protokolliert wird.

Durch die Protokollierung bzw. Aufzeichnung der Durchflussraten und/oder der Durchflussregelstellungen oder Öffnungsstellungen zumindest über einen gewissen Zeitraum, können Zustandsänderungen an der zumindest einen Reinigungsvorrichtung bzw. Membranfiltrationsvorrichtung, und/oder an der Behandlungsflüssigkeit überwacht werden. Insbesondere können auf diese Weise von einem normalen Verfahrensablauf abweichende Zustände, auf Basis von verfahrensatypischen, zeitlichen Änderungen der protokollierten Durchflussraten und/oder Durchflussregelstellungen oder Öffnungsstellungen grundsätzlich erkannt werden. So kann zum Beispiel ein außerordentlicher Eintrag von Verunreinigungen in die Behandlungsflüssigkeit, verursacht etwa durch eine fehlerhafte oder undichte Charge an Behältnissen, erkannt werden. Andererseits können auch Fehler bzw. Schäden an der Reinigungsvorrichtung selbst erkannt werden, beispielsweise schadhafte oder lecke Filtermodule, oder durch Objekte blockierte Filtermodule. Ebenso kann grundsätzlich ein von einer gewünschten Temperatur stark abweichendes Temperaturniveau des wenigstens einen Teilstromes erkannt werden, da eine Durchgängigkeit der Behandlungsflüssigkeit durch die Filtermembranen mit steigender Temperatur der Behandlungsflüssigkeit steigt, und mit sinkender Temperatur der Behandlungsflüssigkeit geringer wird. Derartige, unerwünschte Abweichungen vom Normalbetrieb können hierbei durch im Vergleich zu einem normalen Betrieb, verhältnismäßig große oder schnelle, verfahrensatypische Änderungen der überwachten Durchflussrate oder der überwachten Durchflussregelstellung oder Öffnungsstellung grundsätzlich erkennbar sein.

In weiterer Folge kann dann vorgesehen sein, dass bei einer Detektion einer verfahrensatypischen Änderung der überwachten Durchflussrate des wenigstens einen Teilstromes, oder bei Erfassung einer verfahrensatypischen Änderung der Durchflussregelstellung oder Öffnungsstellung des mindestens einen Durchflussregulierungsmittels, eine Maßnahme durchgeführt wird.

Zum Beispiel kann vorgesehen sein, dass der Behandlungsflüssigkeit als Maßnahme zumindest eine Chemikalie, ausgewählt aus der Menge der pH-Regulatoren, Wasserenthärtungsmittel, Korriosionsinhibitoren, Tensiden und antimikrobiell wirksamen Substanzen beigemengt wird.

Ganz grundsätzlich können chemische Inhaltsstoffe in der Behandlungsflüssigkeit unerwünschte Effekte verursachen. Beispielsweise kann ein ungeeigneter pH-Wert der Behandlungsflüssigkeit zur unerwünschten Ausflockung anderer Inhaltstoffe, oder zu unerwünschten Wechselwirkungen mit den Behältnissen führen. Korrosive Inhaltsstoffe können generell zu Ablösungen, beispielsweise von Einrichtungen der Pasteurisierungsanlage selbst, führen. Weiters können etwa Härtebildner zu Koagulation bzw. Bildung unerwünschter Partikel führen. Außerdem ist eine jeweilige Wachstums- bzw. Vermehrungsrate von Mikroorganismen, etwa Bakterienkulturen oder Algen zu berücksichtigen, welche beispielsweise durch gelöste Nährstoffe in der Behandlungsflüssigkeit erheblich werden kann. Dies kann durch weitere Parameter der Behandlungsflüssigkeit, wie etwa ein erhöhtes Temperaturniveau sogar noch weiter begünstigt werden. Durch die Beimengung bzw. Zugabe von Chemikalien nach Detektion eines verfahrensatypischen Zustandes, beispielsweise eines starken Absinkens einer Durchflussrate durch die Membranfiltrationsvorrichtung, kann solchen unerwünschten Effekten durch gezielte Zugabe von Chemikalien entgegengewirkt werden.

Des Weiteren kann vorgesehen sein, dass als Maßnahme eine Instandsetzung an der Reinigungsvorrichtung oder der Pasteurisierungsanlage durchgeführt wird.

Hierdurch können aufgrund der Erkennung eines verfahrensatypischen Zustandes detektierte Verfahrensfehler oder Beschädigungen an der Pasteurisierungsanlage, insbesondere Beschädigungen an der Reinigungsvorrichtung, beispielsweise ein schadhaftes Filtermodul, wieder instandgesetzt werden.

Bei einer Ausführungsvariante des Verfahrens kann es zweckmäßig sein, wenn die Lebensmittel in den Behältnissen in einer Behandlungszone erwärmt oder in mehreren Behandlungszonen sukzessive erwärmt werden, nachfolgend in einer Behandlungszone oder mehreren Behandlungszonen pasteurisiert werden, und darauf folgend in einer Behandlungszone abgekühlt oder in mehreren Behandlungszonen sukzessive abgekühlt werden.

Auf diese Weise kann eine für die Lebensmittel besonders schonendes Pasteurisierungsverfahren bereitgestellt werden, da großen Temperatursprünge durch die temperierte Behandlungsflüssigkeit vermieden werden können. Außerdem kann auf diese Weise eine gleichmäßigere Temperierung der Lebensmittel in einem jeweiligen Behältnis bereitgestellt werden.

In diesem Fall kann im Besonderen vorgesehen sein, dass der wenigstens eine Teilstrom aus einem Umlaufkreislauf entnommen wird, in welchem der Strom der Behandlungsflüssigkeit ein Temperaturniveau zwischen 30 und 55 °C aufweist.

Bei einer Temperatur der Behandlungsflüssigkeit in dem angegebenen Bereich sind einerseits besonders gute Filtrationsergebnisse erzielbar, da eine gute Durchgängigkeit der Behandlungsflüssigkeit durch die Filtermembranen des Filtermoduls oder der Filtermodule bereitgestellt werden kann. Andererseits kann hierdurch eine Beschädigung der Filtermembranen, , insbesondere von Kunststoffmembranen, wirksam hintangehalten werden. Bevorzugt wird der wenigstens eine Teilstrom aus einem Umlaufkreislauf entnommen, in welchem der Strom der Behandlungsflüssigkeit ein Temperaturniveau zwischen 20 und 60 °C aufweist.

Schließlich kann auch eine Ausführungsform des Verfahrens von Vorteil sein, bei welcher bedarfsabhängig ein Teilvolumenstrom der Behandlungsflüssigkeit durch einen Wärmetauscher einer Kühlvorrichtung geleitet wird.

Auch durch diese Maßnahme kann die Reinigungseffizienz für die Behandlungsflüssigkeit weiter gesteigert werden. Dies vor allem deshalb, da ein Einbringen von Verunreinigungen in die Behandlungsflüssigkeit durch bzw. in der Kühlvorrichtung verhindert werden kann. Kühlvorrichtungen werden häufig zur Abkühlung eines Teiles der Behandlungsflüssigkeit benötigt, welche abgekühlte Behandlungsflüssigkeit beispielsweise wiederum zum Abkühlen von Behältnissen nach erfolgter Pasteurisierung eingesetzt werden kann. Aufgrund der meist erforderlichen, großen Kühlkapazität kann ein Eintrag von Verunreinigungen, beispielsweise bei konventionellen, luftgekühlten Kühltürmen ohne Wärmetauscher hierbei durchaus sehr groß sein.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines Ausführungsbeispiels einer Pasteurisierungsanlage;
- Fig. 2: eine schematische Darstellung eines Ausführungsbeispiels einer Reinigungsvorrichtung der Pasteurisierungsanlage;
- Fig. 3: ausschnittsweise eine schematische Darstellung eines weiteren Ausführungsbeispiels der Pasteurisierungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

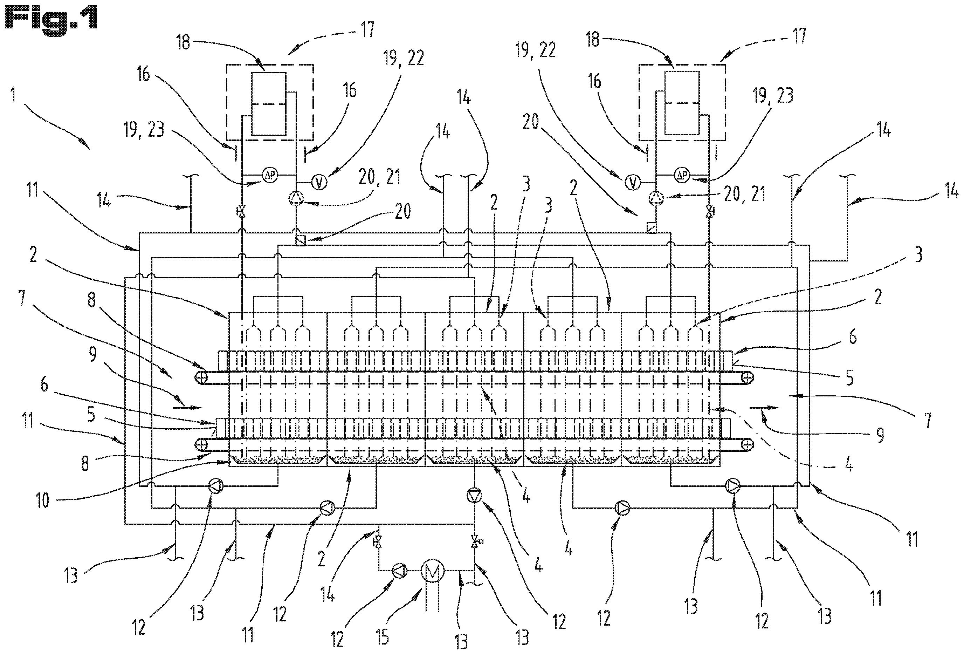

In der Fig. 1 ist ein Ausführungsbeispiel für eine Pasteurisierungsanlage 1 schematisch dargestellt. Die Pasteurisierungsanlage 1 umfasst eine oder mehrere Behandlungszone(n) 2 mit Zuführmittel(n) 3 zur Applikation einer Behandlungsflüssigkeit 4 auf eine Außenseite 5 von Behältnissen 6. In dem Ausführungsbeispiel gemäß der Fig. 1 sind beispielhaft 5 Behandlungszonen 2 dargestellt, wobei es sich von selbst versteht, dass je nach Anforderung und Auslegung einer Pasteurisierungsanlage 1 auch mehr oder weniger Behandlungszone(n) 2 vorgesehen sein können.

Im Betrieb der Pasteurisierungsanlage 1 wird eine Pasteurisierung von Lebensmitteln derart durchgeführt, dass die Lebensmittel vorab in die Behältnisse 6 gefüllt werden, und die Behältnisse 6 verschlossen werden. Ein Behandeln der mit Lebensmitteln befüllten und verschlossenen Behältnisse 6 wird in einer jeweiligen Behandlungszone 2 durch Applizieren einer wässrigen Behandlungsflüssigkeit 4 auf eine Außenseite 5 der Behältnisse 6 via das oder die Zuführmittel 3 durchgeführt. Das oder die Zuführmittel 3 einer jeweiligen Behandlungszone 2 können zum Beispiel durch sprinkler- oder düsenartige Berieselungsmittel bzw. allgemein durch Mittel zum Verteilen der Behandlungsflüssigkeit in einer jeweiligen Behandlungszone 2 gebildet sein. Die temperierte, wässrige Behandlungsflüssigkeit 4 wird auf diese Weise auf die Außenseite 5 der Behältnisse 6 appliziert, wodurch die Behältnisse 6 und somit die in den Behältnissen 6 abgefüllten Lebensmittel gezielt temperiert und pasteurisiert werden können.

Die Behältnisse können beispielsweise durch Flaschen, Dosen oder anderen Gebinden gebildet sein, und grundsätzlich aus diversen Materialien aufgebaut, und gegebenenfalls beschichtet oder bedruckt sein.

Zum Transportieren der Behältnisse 6 durch die Behandlungszone(n) 2 ist eine Transportvorrichtung 7 vorgesehen. Bei dem in der Fig. 1 dargestellten Ausführungsbeispiel umfasst die Transportvorrichtung 7 zwei angetriebene Förderbänder 8, womit die mit Lebensmitteln befüllten und verschlossenen Behältnisse 6 im Betrieb der Pasteurisierungsanlage 1 in zwei Ebenen durch die Behandlungszone(n) 2 transportiert werden. Dies kann in einer, in der Fig.1 mit den Pfeilen veranschaulichten, Transportrichtung 9, zum Beispiel von links nach rechts erfolgen.

Im Betrieb der Pasteurisierungsanlage 1 kann zum Beispiel vorgesehen sein, dass die Lebensmittel in den Behältnissen 6 in einer Behandlungszone 2 oder mehreren Behandlungszonen 2 zunächst erwärmt werden. Ein sukzessives Erwärmen der Lebensmittel bzw. der Behältnisse 6 kann bei dem in der Fig. 1 dargestellten Ausführungsbeispiel zum Beispiel in den beiden links dargestellten Behandlungszonen 2 erfolgen. Nachfolgend auf die Erwärmung können die Lebensmittel in einer Behandlungszone 2 oder mehreren Behandlungszonen 2 pasteurisiert werden, beispielsweise durch Zuführen einer zur Pasteurisierung geeignet temperierten Behandlungsflüssigkeit 4 in die mittig in der Fig. 1 dargestellten Behandlungszone 2. Darauf folgend können die Lebensmittel bzw. die Behältnisse 6 wiederum in einer Behandlungszone 2 oder mehreren Behandlungszonen 2 abgekühlt werden. Ein sukzessives Abkühlen durch Zufuhr einer Behandlungsflüssigkeit 4 mit jeweils zum Abkühlen der Behältnisse 6 geeigneter Temperatur, kann zum Beispiel in den beiden rechts in der Fig. 1 dargestellten Behandlungszonen 2 erfolgen.

Es kann also zum Beispiel vorgesehen sein, dass die Lebensmittel in der in Transportrichtung 9 zuerst angeordneten Behandlungszone 2 erwärmt, und in der in Transportrichtung 9 folgenden Behandlungszone 2 weiter erwärmt werden. In der in Transportrichtung 9 folgenden Behandlungszone 2 können die Lebensmittel sodann durch Applikation einer Behandlungsflüssigkeit 4 mit besonders hohem Temperaturniveau, beispielsweise zwischen 50 °C und 110 °C, auf die Außenseite 5 der Behältnisse 6 pasteurisiert werden. In den darauf in Transportrichtung 9 folgenden, beiden Behandlungszonen 2 können die Lebensmittel bzw. die Behältnisse 6 sodann mittels einer entsprechend temperierten, kühleren Behandlungsflüssigkeit 4 wieder gezielt abgekühlt werden. Dies ist vor allem deshalb von Vorteil, da hierdurch eine möglichst schonende Pasteurisierung der Lebensmittel vorgenommen werden kann, insbesondere ohne die Lebensmittel hierbei durch die Temperierung selbst zu schädigen.

Nach Applikation der temperierten Behandlungsflüssigkeit 4 auf die Außenseite 5 der Behältnisse 6 in der oder den Behandlungszone(n) 2, kann die Behandlungsflüssigkeit in einem unteren Bodenbereich 10 einer jeweiligen Behandlungszone 2 gesammelt, und wieder aus einer jeweiligen Behandlungszone 2 abgeführt werden. Zum Ableiten der Behandlungsflüssigkeit 4 aus der oder den Behandlungszone(n) 2 und zur Rückführung der abgeleiteten Behandlungsflüssigkeit 4 in eine Behandlungszone 2 bzw. eine der Behandlungszonen 2, umfasst die Pasteurisierungsanlage 1 mindestens einen Umlaufkreislauf 11. Im Betrieb der Pasteurisierungsanlage 1 wird hierbei die gesamte Behandlungsflüssigkeit 4, aus der oder den Behandlungszone(n) 2 zur Wiederverwendung in diesem mindestens einen Umlaufkreislauf 11 mittels eines Fördermittels 12 wieder in eine Behandlungszone 2 zurückgeführt.

Wie anhand des in der Fig. 1 dargestellten Ausführungsbeispiels veranschaulicht ist, kann zum Beispiel vorgesehen sein, dass die Behandlungsflüssigkeit 4 über einen Umlaufkreislauf 11 aus einer Behandlungszone 2 abgeführt wird, und einer anderen Behandlungszone 2 zugeführt wird. Bei dem dargestellten Ausführungsbeispiel kann beispielsweise die Behandlungsflüssigkeit 4 aus der äußerst links dargestellten Behandlungszone 2 über einen Umlaufkreislauf 11 der äußerst rechts dargestellten Behandlungszone 2 zugeführt werden. Umgekehrt kann beispielsweise die Behandlungsflüssigkeit 4 aus der äußerst rechts dargestellten Behandlungszone 2 über einen Umlaufkreislauf 11 der äußerst links dargestellten Behandlungszone 2 zum Aufwärmen der Behältnisse 6 bzw. Lebensmittel zugeführt werden. Dies kann vor allem deshalb zweckmäßig sein, da die Behandlungsflüssigkeit 4 während der Applikation bzw. dem Einwirken auf die Behältnisse 6 entsprechend abkühlt oder erwärmt wird. Durch dieses Abkühlen bzw. Erwärmen kann die Behandlungsflüssigkeit 4 aus einer jeweiligen Behandlungszone 2 sodann ein für eine andere Behandlungszone 2 günstiges Temperaturniveau aufweisen. Andererseits kann es aber auch zweckmäßig sein, wenn die Behandlungsflüssigkeit 4 aus einer Behandlungszone 2 über einen Umlaufkreislauf 11 wieder in die selbe Behandlungszone 2 zurückgeführt wird, wie die anhand der in der Fig. 1 mittig dargestellten Behandlungszone 2, welche zum Pasteurisieren der Lebensmittel vorgesehen ist, veranschaulicht ist.

Zur Förderung bzw. Führung von jeweiligen Volumenströmen der Behandlungsflüssigkeit 4 in dem Umlaufkreislauf 11 oder in den Umlaufkreisläufen 11 können jeweils Fördermittel 12, beispielsweise Pumpen vorgesehen sein, wie dies in der Fig. 1 dargestellt ist. Des Weiteren kann auch vorgesehen sein, dass die Pasteurisierungsanlage 1 Mittel 13 zum Ableiten von Teilen der Behandlungsflüssigkeit 4 aus dem Umlaufkreislauf 11 bzw. aus den Umlaufkreisläufen 11 aufweist, beispielsweise zur Probennahme. Weiters kann vorgesehen sein, dass die Pasteurisierungsanlage 1 Mittel 14 zum Zuleiten von Stoffen, wie etwa frischer Behandlungsflüssigkeit 4, beispielsweise Frischwasser, oder von Chemikalien, etc. umfasst. Solche Mittel 13, 14 können zum Beispiel durch Rohrleitungen gebildet sein, welche zum Zu- und Abführen von Behandlungsflüssigkeit 4 in bzw. aus Sammelbecken etc. angeordnet sind, oder welche Mittel 13, 14 zwecks Temperierung von Behandlungsflüssigkeit mit Heiz- und/oder Kühlvorrichtungen strömungstechnisch leitungsverbunden sind. Als Beispiel ist in der Fig. 1 eine Heizvorrichtung 15, beispielsweise ein Dampferhitzer oder eine Wärmepumpe veranschaulicht, welche Heizvorrichtung 15 über Mittel 13, 14 mit dem Umlaufkreislauf 11 zur Rückführung von Behandlungsflüssigkeit 4 in die mittig dargestellte Behandlungszone 2 strömungstechnisch leitungsverbunden ist. Auf diese Weise kann die Behandlungsflüssigkeit für diesen Umlaufkreislauf 11 auf das für eine Pasteurisierung der Lebensmittel jeweils erforderliche Temperaturniveau erwärmt werden.

Durch die fortwährende Führung der Behandlungsflüssigkeit 4 über den Umlaufkreislauf 11 oder die Umlaufkreisläufe 11, bzw. die fortwährende Wiederverwendung der Behandlungsflüssigkeit 4 im Betrieb der Pasteurisierungsanlage 1, werden mit der Zeit Verunreinigungen bzw. unerwünschte Stoffe in die wässrige Behandlungsflüssigkeit eingetragen. Deshalb ist bei dem Verfahren zum Betreiben einer Pasteurisierungsanlage 1 vorgesehen, dass pro Zeiteinheit zumindest eine Teilmenge eines über den mindestens einen Umlaufkreislauf 11 geführten Volumenstromes der Behandlungsflüssigkeit 4 zur Bildung wenigstens eines Teilstromes 16 entnommen bzw. abgezweigt wird, und dieser wenigstens eine Teilstrom 16 durch eine strömungstechnisch mit dem mindestens einen Umlaufkreislauf 11 leitungsverbundene Reinigungsvorrichtung 17, umfassend eine Membranfiltrationsvorrichtung 18 mit einem oder mehreren Filtermodul(en), geführt und filtriert wird, wie dies in der Fig. 1 veranschaulicht ist.

In dem in der Fig. 1 dargestellten Ausführungsbeispiel, sind als Beispiel zwei Reinigungsvorrichtungen 17, umfassend jeweils eine Membranfiltrationsvorrichtung 18, dargestellt, welche Reinigungsvorrichtungen 17 jeweils mit unterschiedlichen Umlaufkreisläufen 11 strömungstechnisch leitungsverbunden sind. Selbstverständlich kann auch nur eine Reinigungsvorrichtung 17 vorgesehen sein, oder kann eine Pasteurisierungsanlage 1 auch mehr als zwei Reinigungsvorrichtungen 17 umfassen. Die Anzahl an Reinigungsvorrichtungen 17, sowie eine Filtrationskapazität einer jeweiligen Membranfiltrationsvorrichtung 18 kann hierbei jeweils unter anderem unter Berücksichtigung der Größe bzw. der Behandlungskapazität einer jeweiligen Pasteurisierungsanlage 1 gewählt bzw. festgelegt werden. Außerdem kann durchaus auch vorgesehen sein, dass mehrere Reinigungsvorrichtungen 17 mit einem Umlaufkreislauf 11 bzw. einem der Umlaufkreisläufe 11 strömungstechnisch leitungsverbunden sind.

Durch fortwährendes Entnehmen und Filtrieren des wenigstens einen Teilstromes 16 kann die Behandlungsflüssigkeit 4 insgesamt bzw. die gesamte Behandlungsflüssigkeit 4 der Pasteurisierungsanlage 1 gereinigt werden. Von Vorteil ist hierbei, dass im Zuge des Verfahrens zum Betreiben der Pasteurisierungsanlage 1 eine ständige Durchmischung der einzelnen Volumenelemente der Behandlungsflüssigkeit 4 aufgrund des Fließens bzw. der Zwangsförderung der Behandlungsflüssigkeit über den Umlaufkreislauf 11 oder die Umlaufkreisläufe 11 stattfindet. In anderen Worten ausgedrückt werden in solchen Fällen einzelne Volumenelemente der Behandlungsflüssigkeit 4 im laufenden Betrieb mit der Zeit über wechselnde Umlaufkreisläufe 11 geführt bzw. in und aus wechselnden Behandlungszonen 2 zu- und abgeführt, sodass mit der Zeit letztlich dies gesamte Behandlungsflüssigkeit 4 mittels der Membranfiltrationsanlage(n) 18 filtriert wird.

Zur Verbesserung der Filtrationseffizienz, bzw. zur Steuerung der Reinigung des wenigstens einen Teilstromes 16, und zur Überwachung des Verfahrens ist vorgesehen, dass fortwährend eine Durchflussrate bzw. ein Volumenstrom des wenigstens einen Teilstromes 16 durch die Membranfiltrationsvorrichtung 18 mittels einer Sensorvorrichtung 19 überwacht wird. Des Weiteren ist vorgesehen, dass auf Basis der Überwachung die pro Zeiteinheit aus dem mindestens einen Umlaufkreislauf 11 entnommene Teilmenge an Behandlungsflüssigkeit 4 hinsichtlich einer gewünschten Durchflussrate des wenigstens einen Teilstromes 16 durch die Membranfiltrationsvorrichtung 18, durch Verstellen einer Durchflussregelstellung mindestens eines verstellbaren Durchflussregulierungsmittels 20 gegenüber der Membranfiltrationsvorrichtung 18, beeinflusst wird. Der wenigstens eine Teilstrom 16 wird nach Hindurchführung durch die Reinigungsvorrichtung 17 bzw. die Membranfiltrationsvorrichtung 18 wieder in einen Umlaufkreislauf 11 oder eine Behandlungszone 2, wie dies in der Fig. 1 dargestellt ist, zurückgeführt.

Vorzugsweise wird der wenigstens eine abgezweigte Teilstrom 16 wieder derjenigen Behandlungsflüssigkeit 4 desselben Umlaufkreislaufes 11, aus der er entnommen wurde, zugeführt. Dies ist unter anderem deshalb von Vorteil, da ein Temperaturniveau des wenigstens einen Teilstromes 16 zumindest im Wesentlichen jenem Temperaturniveau der in dem Umlaufkreislauf 11 geführten Behandlungsflüssigkeit 4 entspricht.

Durchflussregulierungsmittel 20 für die beiden Membranfiltrationsvorrichtungen 18 bzw. Reinigungsvorrichtungen 17, sind in der Fig. 1 zur Veranschaulichung lediglich stark vereinfacht, schematisch dargestellt. Ein Durchflussregulierungsmittel 20 kann zum Beispiel durch eine, in der Fig. 1 strichliert dargestellte, drehzahlregelbare Pumpe 21 oder ein ähnliches regelbares Fördermittel gebildet sein. In einem solchen Fall kann zur Beeinflussung der Durchflussrate des wenigstens einen Teilstromes 16 durch die Membranfiltrationsvorrichtung 18 als Durchflussregelstellung gegenüber der Membranfiltrationsvorrichtung 18 eine Drehzahl der regelbaren Pumpe 21 verstellt, also vergrößert oder verkleinert werden.

Vorzugseise wird das Verfahren derart ausgeführt, dass die pro Zeiteinheit aus dem mindestens einen Umlaufkreislauf 11 entnommenen Teilmenge an Behandlungsflüssigkeit 4 hinsichtlich einer gewünschten Durchflussrate des wenigstens einen Teilstromes 16 durch die Membranfiltrationsvorrichtung 18, durch Verstellen einer Öffnung des mindestens einen Durchflussregulierungsmittels 20 gegenüber der Membranfiltrationsvorrichtung 18, beeinflusst wird. Als Beispiele für Durchflussregulierungsmittel, bei welchen eine Öffnung gegenüber der Membranfiltrationsvorrichtung 18 verstellt werden kann, können unter anderem Verstellklappen, Hubventile oder 3-Wege-Verteilventile genannt werden. Mittels derartiger Durchflussregulierungsmittel 20, kann eine Öffnung bzw. Öffnungsstellung gegenüber der Membranfiltrationsvorrichtung 18, und damit die Durchflussrate bzw. der Volumenstrom des wenigstens einen Teilstromes 16 durch die zumindest eine Reinigungsvorrichtung 17 bzw. die Membranfiltrationsvorrichtung 18, jeweils bedarfsabhängig vergrößert oder verkleinert werden. Auf diese Weise kann in weiterer Folge die Filtrationsleistung jeweils gesteigert oder erniedrigt werden. Mögliche Öffnungsstellungen derartiger Durchflussregulierungsmittel 20 können zum Beispiel zwischen einer maximalen Öffnungsstellung gegenüber der Membranfiltrationsvorrichtung 18, und einer vollständig gegenüber der Membranfiltrationsvorrichtung 18 geschlossenen Öffnungsstellung eingestellt werden.

Selbstverständlich ist es im Prinzip auch möglich, dass zur Steuerung der Entnahme der zumindest einen Teilmenge an Behandlungsflüssigkeit 4 aus dem mindestens einen Umlaufkreislauf 11, bzw. zur Steuerung der Durchflussrate des wenigstens einen Teilstromes 16 durch die Membranfiltrationsvorrichtung 18, mehrere Durchflussregulierungsmittel 20 in Kombination miteinander eingesetzt bzw. verstellt werden.

Vorzugsweise wird eine gewünschte Durchflussrate für den wenigstens einen Teilstrom 16 durch die Membranfiltrationsvorrichtung 18 ausgewählt aus einem Bereich zwischen 0,1 % und 50 % bezogen auf den Volumenstrom der Behandlungsflüssigkeit 4 in dem mindestens einen Umlaufkreislauf 11 vor dem Entnehmen des Teilstromes 16. Im Besonderen kann eine Durchflussrate für den wenigstens einen Teilstrom 11 ausgewählt werden aus einem Bereich zwischen 0,5 % und 20 % bezogen auf den Volumenstrom der Behandlungsflüssigkeit 4 in dem mindestens einen Umlaufkreislauf 11 vor dem Entnehmen des Teilstromes 16.

Außerdem kann es zweckmäßig sein, wenn der wenigstens eine Teilstrom 16 aus einem Umlaufkreislauf 11 entnommen wird, in welchem der Strom der Behandlungsflüssigkeit 4 ein Temperaturniveau zwischen 20 und 60 °C aufweist. Bei einer Temperatur der Behandlungsflüssigkeit 4 in dem angegebenen Bereich sind einerseits besonders gute Filtrationsergebnisse erzielbar, da eine gute Durchgängigkeit der Behandlungsflüssigkeit 4 durch die Filtermembranen des Filtermoduls oder der Filtermodule der Membranfiltrationsvorrichtung 18 bereitgestellt werden kann. Andererseits kann hierdurch eine Beschädigung der Filtermembranen, insbesondere von Kunststoffmembranen, wirksam hintangehalten werden. Bevorzugt wird der wenigstens eine Teilstrom 16 aus einem Umlaufkreislauf 11 entnommen, in welchem der Strom der Behandlungsflüssigkeit 4 ein Temperaturniveau zwischen 30 und 55 °C aufweist.

Eine jeweilige Durchflussrate bzw. ein jeweiliger Volumenstrom des wenigstens einen Teilstromes 16 durch die Membranfiltrationsvorrichtung 18, kann zum Beispiel mittels einer Sensorvorrichtung 19 umfassend einen Durchflussmengensensor 22 überwacht werden, wie dies auch in der Fig. 1 dargestellt ist. Es kann aber auch vorgesehen sein, dass ein Druckverlust über die Membranfiltrationsvorrichtung 18 fortwährend mittels einer Sensorvorrichtung 19 umfassend einen Differenzdrucksensor 23 oder wenigstens zwei Drucksensoren überwacht wird, wie dies ebenfalls in der Fig. 1 veranschaulicht ist. Auch in letzterem Falle kann in Zusammenhang mit einer jeweiligen Durchflussregelstellung oder Öffnungsstellung des mindestens einen Durchflussregulierungsmittels 20 gegenüber der Membranfiltrationsanlage 18, eine Durchflussrate des wenigstens einen Teilstromes 16 durch die Membranfiltrationsvorrichtung 18 abgeschätzt werden.

Unabhängig davon kann es aber auch zweckmäßig sein, wenn eine Durchflussregelstellung oder Öffnungsstellung des mindestens einen verstellbaren Durchflussregulierungsmittels 20 gegenüber der Membranfiltrationsvorrichtung 18 fortwährend überwacht wird. Dies vor allem deshalb von Vorteil sein, da auch hierdurch ein Kontroll- bzw. Überwachungsmittel für einen Zustand, etwa den Verunreinigungszustand der Behandlungsflüssigkeit 4 und/oder der Reinigungsvorrichtung 17 bzw. der Membranfiltrationsvorrichtung 18 bereitgestellt werden kann.

Es kann sodann zum Beispiel vorgesehen sein, dass für die sensorisch überwachte Durchflussrate des wenigstens einen Teilstromes 16 durch die Membranfiltrationsvorrichtung 18, und/oder für die überwachte Durchflussregelstellung oder Öffnungsstellung des mindestens einen Durchflussregulierungsmittels 20, jeweils regelungstechnische Grenzwerte gewählt bzw. festgelegt werden.

In weiterer Folge kann dann beispielsweise vorgesehen sein, dass bei Überschreitung eines Grenzwertes für die Durchflussregelstellung oder Öffnungsstellung des mindestens einen Durchflussregulierungsmittels 20 eine Maßnahme durchgeführt bzw. eingeleitet wird. Alternativ oder zusätzlich kann auch vorgesehen sein, dass bei Unterschreitung eines Grenzwertes für die überwachte Durchflussrate des wenigstens einen, entnommenen Teilstromes 16 durch die Membranfiltrationsvorrichtung 18 eine Maßnahme durchgeführt wird.

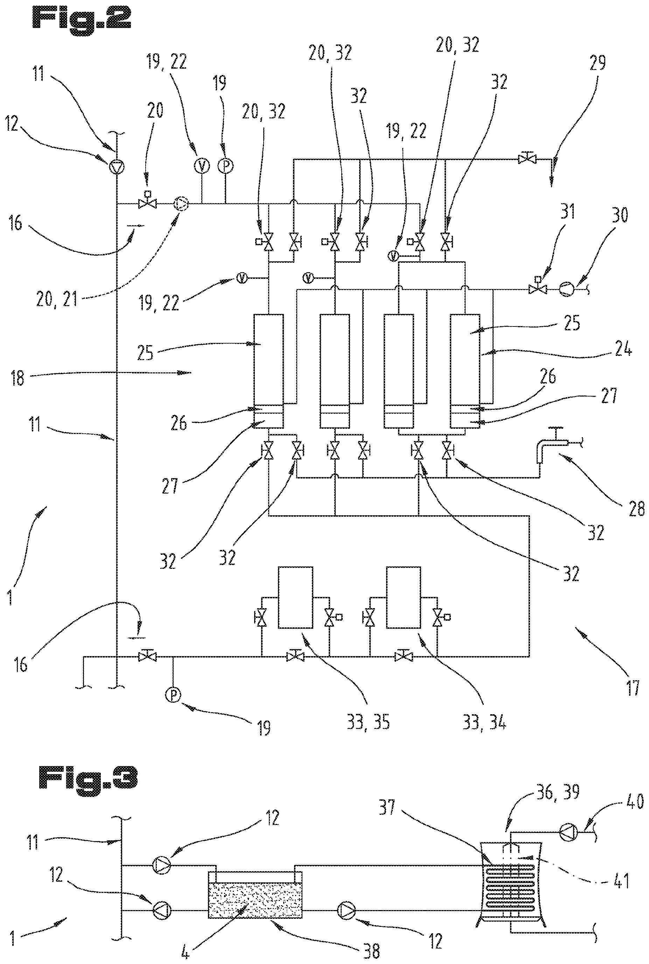

Als Maßnahme kann hierbei zumindest vorgesehen sein, dass eine Rückspülung unter Umkehrung der Flussrichtung eines Filtermoduls oder mehrerer oder aller Filtermodule der Membranfiltrationsvorrichtung 18 durchgeführt wird, wie dies anhand des in der Fig. 2 dargestellten Ausführungsbeispiels für eine Reinigungsvorrichtung 17, bzw. für eine ausschnittsweise dargestellt Pasteurisierungsanlage 1 erläutert wird. In der Fig. 2 werden für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen.

Wie in der Fig. 2 veranschaulicht ist, kann die Membranfiltrationsvorrichtung 18 der Reinigungsvorrichtung 17 mehrere Filtermodule 24 umfassen, wobei in der Fig. 2 rein beispielhaft 4 Filtermodule 24 dargestellt sind. Die Anzahl an Filtermodulen 24, und auch die Filtrationskapazität der Filtermodule 26 kann jeweils gemäß einem zu erwartenden Verunreinigungsgrad und/oder an das im Betrieb insgesamt durch die Pasteurisierungsanlage 1 geführte Volumen an Behandlungsflüssigkeit angepasst gewählt werden. Im Prinzip können die Filtermodule 24 der Membranfiltrationsvorrichtung 18 beliebig in der Membranfiltrationsvorrichtung 18 angeordnet sein, beispielsweise strömungstechnisch seriell hintereinandergeschaltet. Bei dem in der Fig. 2 dargestellten Ausführungsbeispiel sind die Filtermodule 24 strömungstechnisch parallel zueinander angeordnet, sodass jeweils eine Teilmenge des Teilstromes 16 über bzw. durch ein Filtermodul 24 geführt werden kann.

Die Ausgestaltung der einzelnen Filtermodule 24 kann im Grunde genommen ebenfalls beliebig gewählt sein, solange eine temperierte, wässrige Behandlungsflüssigkeit hiermit filtriert werden kann. Ein Filtermodul 24 kann zum Beispiel eine Vielzahl an Hohlfasermembranen aufweisen, welche in einem beschickungsseitigen Retentat-Raum 25 angeordnet sein können. Diese Hohlfasermembranen können zum Beispiel Poren mit einem Porendurchmesser zwischen 0,01 µm und 0,5 µm aufweisen, um für Mikro- bzw. Ultrafiltration geeignet zu sein. Die jeweils offenen Enden der Hohlfasermembranen eines Filtermoduls 24 können in einem Dichtmittel 26 derart eingebettet sein, dass die offenen Enden bzw. die innenseitigen Hohlräume der Hohlfasern in einen Filtrat- bzw. Permeat-Raum 27 eines Filtermoduls 24 münden.

Das Dichtmittel 26 kann hierbei den Retentat-Raum 25 von dem Permeat-Raum 27 dichtend abtrennen, sodass der wenigstens eine Teilstrom 16 der wässrigen Behandlungsflüssigkeit lediglich via Durchdringen der Hohlfasermembranwände von einer Außenseite der Hohlfasermembranen in das Innenlumen der Hohlfasern von den Retentat-Räumen 25 in die Permeat-Räume 27 der Filtermodule 24 gelangen kann. Hierbei wird der wenigstens eine Teilstrom 16 filtriert, und werden partikuläre bzw. koagulierte Verunreinigungen retentat-seitig zurückgehalten.

Wie weiters in der Fig. 2 dargestellt ist, können die Filtermodule 24 einer Membranfiltrationsvorrichtung 18, jeweils bedarfsweise absperrbar oder durchströmbar, permeat- bzw. filtrat-seitig mit einer Rückspülflüssigkeitsquelle 28, und retentat- bzw. beschickungsseitig mit einem Abfluss 29 leitungsverbunden sein. Hierdurch können die Filtermodule 24 der Membranfiltrationsvorrichtung 18 zur Reinigung der Filtermembranen, beispielsweise der Hohlfasermembranen, unter Umkehrung der Flussrichtung über die Filtermodule 24 mit einer Rückspülflüssigkeit gereinigt werden. Beispielsweise können die Filtermembranen auf diese Weise retentat-seitig von einem Filterkuchen berfreit werden. Hierbei kann zum Beispiel vorgesehen sein, dass alle Filtermodule 24 einer Membranfiltrationsvorrichtung 18 gemeinsam gereinigt werden. Alternativ kann aber auch vorgesehen sein, dass jeweils Gruppen von Filtermodulen, oder sogar jedes Filtermodul 24 separat wahlweise absperrbar oder durchströmbar mit einer Rückspülflüssigkeitsquelle 28 und einem Abfluss 29 leitungsverbunden sind, wie dies auch in der Fig. 2 dargestellt ist. Als Rückspülflüssigkeit kann zum Beispiel sauberes Frischwasser verwendet werden, welchem gegebenenfalls Reinigungschemikalien zugesetzt werden können.

Des Weiteren kann vorgesehen sein, dass das oder die Filtermodul(e) 24 der Membranfiltrationsvorrichtung 18 retentat-seitig zyklisch oder bedarfsabhängig mit einem Gasstrom beschickt werden. Hierzu können das oder die Filtermodul(e) 24 mit einer Gasquelle 30, beispielsweise einem Luftgebläse oder einem Kompressor leitungsverbunden sein. Grundsätzlich kann jedes Filtermodul 24 separat, oder zusammengefasste Gruppen von Filtermodulen 24 über jeweils ein Absperrorgan 31 wahlweise absperrbar oder durchströmbar mit einer Gasquelle 30 leitungsverbunden sein. Bei dem in der Fig. 2 dargestellten Ausführungsbeispiel sind rein beispielhaft alle Filtermodule 24 der Membranfiltrationsvorrichtung 18 über ein gemeinsames Absperrorgan 31 wahlweise absperrbar oder durchströmbar mit der Gasquelle 30 leitungsverbunden.

Im Speziellen kann vorgesehen sein, dass das oder die Filtermodul(e) 24 der Membranfiltrationsvorrichtung 18 während eines Rückspülvorgangs retentat-seitig mit einem Gasstrom beaufschlagt werden. Hierdurch kann ein Reinigungsvorgang für das oder die Filtermodul(e) unter Rückspülung wirksam unterstützt werden.

Wie anhand des Ausführungsbeispiels gemäß der Fig. 2 veranschaulicht ist, kann weiters vorgesehen sein, dass fortwährend mittels jeweils einer Sensorvorrichtung 19, aufweisend beispielsweise einen Durchflussmengensensor 22, eine Durchflussrate bzw. ein Volumenstrom der Behandlungsflüssigkeit durch einzelne Filtermodule 24, beispielsweise die beiden in der Fig. 2 links dargestellten Filtermodule 24, oder Gruppen von Filtermodulen 24 der Membranfiltrationsvorrichtung 18, beispielsweise die in der Fig. 2 rechts dargestellte Gruppe aus zwei Filtermodulen 24, überwacht wird. Hierbei addieren sich die gemessenen Durchflussraten durch die einzelnen Filtermodule 24 oder Gruppen von Filtermodulen 24 zu einer gesamten Durchflussrate über die Membranfiltrationsvorrichtung 18.

Wie außerdem aus der Fig.2 ersichtlich ist, kann hierbei auch vorgesehen sein, dass bei einer Unterschreitung eines jeweils festgelegten Grenzwertes für eine Durchflussrate durch ein einzelnes Filtermodul 24 oder eine Gruppe von Filtermodulen 24, das entsprechende einzelne Filtermodul 24 oder die entsprechende Gruppe von Filtermodulen 24 unter Umkehrung der Flussrichtung rückgespült werden. Dies ist bei dem in der Fig. 2 dargestellten Ausführungsbeispiel möglich, da die beiden linkerhand dargestellten Filtermodule, und die rechterhand dargestellte Gruppe aus zwei Filtermodulen 24, jeweils unabhängig voneinander gegenüber der Rückspülflüssigkeitsquelle 28 und dem Abfluss 29, respektive gegenüber dem Umlaufkreislauf 11 via Absperrmittel 32 wahlweise abgesperrt oder durchströmbar gestellt werden können.

Grundsätzlich ist es auch denkbar, dass eine Durchflussrate bzw. Volumenströme der Behandlungsflüssigkeit durch einzelne Filtermodule 24 oder Gruppen von Filtermodulen 24, jeweils mittels eines separaten Durchflussregulierungsmittels 20 beeinflusst werden, wie dies ebenfalls in der Fig. 2 dargestellt ist. Die jeweiligen Durchflussraten durch die einzelnen Filtermodule 24 addieren sich hierbei zu einer gesamten Durchflussrate des wenigstens einen, aus dem mindestens einen Umlaufkreislauf 11 entnommenen, Teilstromes 16 durch die Membranfiltrationsvorrichtung 18. Ein jeweiliges, hierzu angeordnetes Durchflussregulierungsmittel 20 kann hierbei auch als Absperrmittel 32 gegenüber dem Umlaufkreislauf 11 verwendet werden.

Bei einer bevorzugten Weiterbildung des Verfahrens kann vorgesehen sein, dass die Durchflussrate des wenigstens einen Teilstromes 16 durch die Membranfiltrationsvorrichtung 18 und/oder die Durchflussregelstellung oder Öffnungsstellung des mindestens einen Durchflussregulierungsmittels 20 protokolliert wird, also über einen bestimmten Zeitraum aufgezeichnet wird. Die protokollierten Daten der Durchflussraten des wenigstens einen Teilstromes 16 über die Zeit, und/oder die protokollierten Daten der Durchflussregelstellungen oder Öffnungsstellungen des mindestens einen Durchflussregulierungsmittels 20 über die Zeit, können vorteilhafterweise Informationen über Zustände der wenigstens einen Reinigungsvorrichtung 17 bzw. der Membranfiltrationsvorrichtung 18 liefern. Auch können auf diese Weise Rückschlüsse auf den Zustand der Behandlungsflüssigkeit, bzw. die Qualität der Behandlungsflüssigkeit getätigt werden. Im Besonderen kann auf Basis dieser protokollierten Daten ein Gehalt diverser Inhaltsstoffe in der Behandlungsflüssigkeit, wie beispielsweise Trübungsstoffe, koagulierte Substanzen, Staub oder andere partikuläre Verunreinigungen, Mikroorganismen, oder schleimbildende Substanzen, abgeschätzt werden. Zum Beispiel kann eine außerordentlich starke Vermehrung bzw. ein außerordentliches Wachstum von Mikroorganismen-Kulturen mit der Zeit durch ein atypisches Absinken einer Durchflussrate oder einer atypischen Vergrößerung einer Durchflussregelstellung oder Öffnungsstellung erkannt werden.

In weiterer Folge kann dann vorgesehen sein, dass bei einer Detektion einer verfahrensatypischen Änderung der überwachten Durchflussrate des wenigstens einen Teilstromes 16, oder bei Erfassung einer verfahrensatypischen Änderung der Durchflussregelstellung oder Öffnungsstellung des mindestens einen Durchflussregulierungsmittels 20, eine Maßnahme durchgeführt wird. Es kann also zum Beispiel auf Basis einer Analyse des zeitlichen Verlaufes der protokollierten Daten eine atypische Änderung erkannt werden, welche von einem normalen Betrieb der wenigstens einen Reinigungsvorrichtung 17 bzw. der Membranfiltrationsvorrichtung 18 abweicht. Ein normaler Betrieb der Membranfiltrationsvorrichtung 18 kann sich zum Beispiel aufgrund eines wechselnden Filtrationsbetriebes und Rückspülbetriebes, durch zyklisch leicht schwankende Durchflussregelstellungen oder Öffnungsstellungen des mindestens einen Durchflussregulierungsmittels 20 darstellen. Bei einem Erkennen bzw. Detektion eines hiervon abweichenden zeitlichen Verlaufs der protokollierten Daten, also einer verfahrensatypischen Änderung des protokollierten, zeitlichen Verlaufs der Daten für Durchflussraten und/oder Durchflussregelstellungen oder Öffnungsstellungen, kann sodann entsprechend eine Maßnahme durchgeführt bzw. eingeleitet werden.

Zum Beispiel kann dann vorgesehen sein, dass der Behandlungsflüssigkeit als Maßnahme zumindest eine Chemikalie beigemengt wird. Dies kann etwa zum Zweck einer Auflösung koagulierter Substanzen, oder zum Zwecke einer Änderung bzw. Einstellung der chemischen Zusammensetzung oder anderer Parameter der Behandlungsflüssigkeit erfolgen. Beispielsweise kann ein ungeeigneter pH-Wert der Behandlungsflüssigkeit zur unerwünschten Ausflockung anderer Inhaltstoffe, oder zu unerwünschten Wechselwirkungen mit den Behältnissen führen. Korrosive Inhaltsstoffe können generell zu Ablösungen, beispielsweise von Einrichtungen der Pasteurisierungsanlage 1 selbst, führen. Weiters können etwa Härtebildner zu Koagulation bzw. Bildung unerwünschter Partikel führen. Außerdem ist eine jeweilige Wachstums- bzw. Vermehrungsrate von Mikroorganismen, etwa Bakterienkulturen oder Algen zu berücksichtigen, welche beispielsweise durch gelöste Nährstoffe in der Behandlungsflüssigkeit erheblich werden kann. Dies kann durch weitere Parameter der Behandlungsflüssigkeit, wie etwa ein erhöhtes Temperaturniveau sogar noch weiter begünstigt werden. Im Besonderen kann die zumindest eine Chemikalie ausgewählt sein aus der Menge der pH-Regulatoren, Enthärtungsmittel, Korriosionsinhibitoren, Tensiden und antimikrobiell wirksamen Substanzen. Chemikalien können der Behandlungsflüssigkeit beispielsweise über die in der Fig. 1 dargestellten Mittel 14 bzw. Rohrleitungen, oder anderweitig bzw. an anderen Stellen beigemengt werden.

Grundsätzlich können aber auch Beschädigungen der wenigstens einen Reinigungsvorrichtung 17 bzw. der Membranfiltrationsvorrichtung 18, beispielsweise ein schadhaftes Filtermodul 24, oder andere verfahrensatypische Zustände an der Pasteurisierungsanlage 1 selbst auf Basis der protokollierten Daten für Durchflussraten durch die Membranfiltrationsvorrichtung 18 und/oder Durchflussregelstellungen oder Öffnungsstellungen des mindestens einen Durchflussregulierungsmittels 20, detektiert werden. Daher kann auch vorgesehen sein, dass als Maßnahme eine Instandsetzung an der Reinigungsvorrichtung 17 oder der Pasteurisierungsanlage 1 durchgeführt wird.

Generell kann die wenigstens eine Reinigungsvorrichtung 17 der Pasteurisierungsanlage 1 noch weitere Reinigungsmodule zur fortgesetzten Reinigung des wenigstens einen Teilstromes 16, bzw. zur Entfernung weiterer, unerwünschter Verunreinigungen aus dem wenigstens einen Teilstrom 16, umfassen, wie dies schematisch in der Fig. 2 gezeigt ist. Derartige, weitere Reinigungsmodule 33 können beispielsweise Ionenaustauschvorrichtungen 34, oder etwa Adsorptionsvorrichtungen 35 umfassen, mittels welchen zum Beispiel auch gelöste Stoffe aus der Behandlungsflüssigkeit entfernt werden können.

In der Fig. 3 ist schließlich ein weiteres Ausführungsbeispiel für eine Pasteurisierungsanlage 1 ausschnittsweise dargestellt, welches für die fortwährende Wiederverwendung und Reinhaltung der Behandlungsflüssigkeit 4 von Vorteil sein kann. In der Fig. 3 werden für gleiche Teile gleiche Bezugszeichen bzw. Bauteilbezeichnungen wie in den vorangegangenen Fig. 1 und 2 verwendet. Um unnötige Wiederholungen zu vermeiden, wird auf die detaillierte Beschreibung in den vorangegangenen Fig. 1 und Fig. 2 hingewiesen bzw. Bezug genommen.

Wie aus dem Ausführungsbeispiel der in der Fig. 3 ausschnittsweise dargestellten Pasteurisierungsanlage 1 ersichtlich ist, kann vorgesehen sein, dass die Pasteurisierungsanlage 1 eine Kühlvorrichtung 36 umfasst, welche einen bedarfsweise von der Behandlungsflüssigkeit 4 durchströmbaren Wärmetauscher 37 aufweist. Auf diese Weise kann bedarfsabhängig ein Teilvolumenstrom der Behandlungsflüssigkeit 4 durch einen Wärmetauscher 37 einer Kühlvorrichtung 36 geleitet werden.

Solche Kühlvorrichtungen 36 werden in Pasteurisierungsanlagen häufig zur Abkühlung eines Teiles der Behandlungsflüssigkeit 4 benötigt, welche abgekühlte Behandlungsflüssigkeit 4 beispielsweise wiederum zum Abkühlen von Behältnissen nach erfolgter Pasteurisierung eingesetzt werden kann. Durch das Vorsehen des Wärmetauschers 37 kann ein Einbringen von Verunreinigungen in die Behandlungsflüssigkeit 4, beispielsweise durch bzw. in einem konventionellen, luftgekühlten Kühlturm 36 wirksam hintangehalten werden.

Wie in der Fig. 3 dargestellt ist, kann zur Abkühlung einer Teilmenge der Behandlungsflüssigkeit 4 zum Beispiel vorgesehen sein, dass bedarfsabhängig eine Teilmenge der Behandlungsflüssigkeit 4 aus einem Umlaufkreislauf 11 mittels eines Fördermittels 12 in ein Behandlungsflüssigkeitsreservoir 38, beispielsweise in Sammelbecken oder ähnliches, überführt wird. Ebenfalls bedarfsabhängig kann sodann mittels einem weiteren Fördermittel 12 Behandlungsflüssigkeit 4 aus dem Behandlungsflüssigkeitsreservoir 38 durch den Wärmetauscher 37 der Kühlvorrichtung 36 gepumpt, zum Beispiel durch Kühlungsluft abgekühlt, und wieder in das Behandlungsflüssigkeitsreservoir 38 zurückgeführt werden. In der Fig. 3 ist beispielhaft als Kühlvorrichtung 36 ein Kühlturm 39 dargestellt, welchem Kühlturm 39 über einen Kühlkreislauf 40 Kühlflüssigkeit 41 zugeführt werden kann. Die gekühlte Behandlungsflüssigkeit 4 aus dem Behandlungsflüssigkeitsreservoir 38 kann sodann dem in der Fig. 3 beispielhaft dargestellten Umlaufkreislauf 11 zugeführt werden.

Die im Zuge dieses Dokumentes angegebenen Verfahrensmaßnahmen können im Prinzip teilweise manuell ausgeführt werden. Vorzugsweise werden die Maßnahmen zumindest überwiegend mittels einer oder mehrerer signalverbundener Steuerungsvorrichtungen automatisiert gesteuert ausgeführt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Pasteurisierungsanlage | 31 | Absperrorgan |
| 2 | Behandlungszone | 32 | Absperrmittel |
| 3 | Zuführmittel | 33 | Reinigungsmodul |
| 4 | Behandlungsflüssigkeit | 34 | Ionenaustauschvorrichtung |
| 5 | Außenseite | 35 | Adsorptionsvorrichtung |
| 6 | Behältnis | 36 | Kühlvorrichtung |
| 7 | Transportvorrichtung | 37 | Wärmetauscher |
| 8 | Förderband | 38 | Behandlungsflüssigkeitsreservoir |
| 9 | Transportrichtung | 39 | Kühlturm |
| 10 | Bodenbereich | 40 | Kühlkreislauf |
| 11 | Umlaufkreislauf | 41 | Kühlflüssigkeit |
| 12 | Fördermittel | | |
| 13 | Mittel | | |
| 14 | Mittel | | |
| 15 | Heizvorrichtung | | |
| 16 | Teilstrom | | |
| 17 | Reinigungsvorrichtung | | |
| 18 | Membranfiltrationsvorrichtung | | |
| 19 | Sensorvorrichtung | | |
| 20 | Durchflussregulierungsmittel | | |
| 21 | Pumpe | | |
| 22 | Durchflussmengensensor | | |
| 23 | Differenzdrucksensor | | |
| 24 | Filtermodul | | |
| 25 | Retentat-Raum | | |
| 26 | Dichtmittel | | |
| 27 | Permeat-Raum | | |
| 28 | Rückspülflüssigkeitsquelle | | |
| 29 | Abfluss | | |
| 30 | Gasquelle | | |

## Patentansprüche

1. Verfahren zum Betreiben einer Pasteurisierungsanlage (1), umfassend
Transportieren von mit Lebensmitteln befüllten und verschlossenen Behältnissen (6) durch eine oder mehrere Behandlungszone(n) (2),
Behandeln der Behältnisse (6) mit einer temperierten, wässrigen Behandlungsflüssigkeit (4) in der oder den Behandlungszone(n) (2) durch Applizieren der Behandlungsflüssigkeit (4) auf eine Außenseite (24) der Behältnisse (6),
wobei die Behandlungsflüssigkeit (4) aus der oder den Behandlungszone(n) (2) zur Wiederverwendung in mindestens einem Umlaufkreislauf (11) mittels eines Fördermittels (12) wieder in eine Behandlungszone (2) zurückgeführt wird,
und wobei pro Zeiteinheit eine Teilmenge eines über den mindestens einen Umlaufkreislauf (11) geführten Volumenstromes der Behandlungsflüssigkeit (4) zur Bildung wenigstens eines Teilstromes (16) entnommen wird,
welcher wenigstens eine Teilstrom (16) durch eine strömungstechnisch mit dem mindestens einen Umlaufkreislauf (11) leitungsverbundene Reinigungsvorrichtung (17), umfassend eine Membranfiltrationsvorrichtung (18) mit einem oder mehreren Filtermodul(en) (24), geführt und filtriert wird,
**dadurch gekennzeichnet, dass**
fortwährend eine Durchflussrate des wenigstens einen Teilstromes (16) durch die Membranfiltrationsvorrichtung (18) mittels einer Sensorvorrichtung (19) überwacht wird,
und dass auf Basis der Überwachung die pro Zeiteinheit aus dem mindestens einen Umlaufkreislauf (11) entnommene Teilmenge an Behandlungsflüssigkeit (4) hinsichtlich einer gewünschten Durchflussrate des wenigstens einen Teilstromes (16) durch die Membranfiltrationsvorrichtung (18), durch Verstellen einer Durchflussregelstellung mindestens eines verstellbaren Durchflussregulierungsmittels (20) gegenüber der Membranfiltrationsvorrichtung (18), beeinflusst wird,
wobei der wenigstens eine Teilstrom (16) nach Hindurchführung durch die Reinigungsvorrichtung (17) wieder in einen Umlaufkreislauf (11) oder eine Behandlungszone (2) zurückgeführt wird.

2. Verfahren nach Anspruch 1, **dadurch gekennzeichnet, dass** eine gewünschte Durchflussrate für den wenigstens einen Teilstrom (16) durch die Membranfiltrationsvorrichtung (18) ausgewählt wird aus einem Bereich zwischen 0,1 % und 50 % bezogen auf den Volumenstrom der Behandlungsflüssigkeit (4) in dem mindestens einen Umlaufkreislauf (11) vor dem Entnehmen des Teilstromes (16).

3. Verfahren nach Anspruch 1 oder 2, **dadurch gekennzeichnet, dass** die pro Zeiteinheit aus dem mindestens einen Umlaufkreislauf (11) entnommenen Teilmenge an Behandlungsflüssigkeit (4) hinsichtlich einer gewünschten Durchflussrate des wenigstens einen Teilstromes (16) durch die Membranfiltrationsvorrichtung (18), durch Verstellen einer Öffnung des mindestens einen Durchflussregulierungsmittels (20) gegenüber der Membranfiltrationsvorrichtung (18), beeinflusst wird.

4. Verfahren nach einem der vorhergehenden Ansprüche, **dadurch gekennzeichnet, dass** eine Durchflussregelstellung oder Öffnungsstellung des mindestens einen verstellbaren Durchflussregulierungsmittels (20) gegenüber der Membranfiltrationsvorrichtung (18) fortwährend überwacht wird.

5. Verfahren nach Anspruch 4, **dadurch gekennzeichnet, dass** bei Überschreitung eines Grenzwertes für die Durchflussregelstellung oder Öffnungsstellung des mindestens einen Durchflussregulierungsmittels (20) eine Maßnahme durchgeführt wird.

6. Verfahren nach einem der vorhergehenden Ansprüche, **dadurch gekennzeichnet, dass** bei Unterschreitung eines Grenzwertes für die überwachte Durchflussrate des wenigstens einen, entnommenen Teilstromes (16) durch die Membranfiltrationsvorrichtung (18) eine Maßnahme durchgeführt wird.

7. Verfahren nach Anspruch 5 oder 6, **dadurch gekennzeichnet, dass** als Maßnahme eine Rückspülung unter Umkehrung der Flussrichtung eines Filtermoduls oder mehrerer oder aller Filtermodule (24) der Membranfiltrationsvorrichtung (18) durchgeführt wird.

8. Verfahren nach einem der vorhergehenden Ansprüche, **dadurch gekennzeichnet, dass** die Durchflussrate des entnommenen Teilstromes (16) mittels einer Sensorvorrichtung (19) umfassend einen Durchflussmengensensor (22) überwacht wird.

9. Verfahren nach einem der vorhergehenden Ansprüche, **dadurch gekennzeichnet, dass** ein Druckverlust über die Membranfiltrationsvorrichtung (18) fortwährend mittels einer Sensorvorrichtung (19) umfassend einen Differenzdrucksensor (23) oder wenigstens zwei Drucksensoren überwacht wird.

10. Verfahren nach einem der vorhergehenden Ansprüche, **dadurch gekennzeichnet, dass** fortwährend mittels jeweils einer Sensorvorrichtung (19) eine Durchflussrate der Behandlungsflüssigkeit (4) durch einzelne Filtermodule (24) oder Gruppen von Filtermodulen (24) der Membranfiltrationsvorrichtung (18) überwacht wird, wobei sich die Durchflussraten durch die einzelnen Filtermodule (24) oder Gruppen von Filtermodulen (24) zu einer gesamten Durchflussrate über die Membranfiltrationsvorrichtung (18) addieren.

11. Verfahren nach Anspruch 10, **dadurch gekennzeichnet, dass** bei einer Unterschreitung eines jeweils festgelegten Grenzwertes für eine Durchflussrate durch ein einzelnes Filtermodul (24) oder eine Gruppe von Filtermodulen (24), das entsprechende einzelne Filtermodul (24) oder die entsprechende Gruppe von Filtermodulen (24) unter Umkehrung der Flussrichtung rückgespült werden.

12. Verfahren nach einem der vorhergehenden Ansprüche, **dadurch gekennzeichnet, dass** das oder die Filtermodul(e) (24) der Membranfiltrationsvorrichtung (18) retentat-seitig zyklisch oder bedarfsabhängig mit einem Gasstrom beaufschlagt werden.

13. Verfahren nach Anspruch 12, **dadurch gekennzeichnet, dass** das oder die Filtermodul(e) (24) der Membranfiltrationsvorrichtung (18) während eines Rückspülvorgangs retentat-seitig mit einem Gasstrom beaufschlagt werden.

14. Verfahren nach einem der vorhergehenden Ansprüche, **dadurch gekennzeichnet, dass** die Durchflussrate des wenigstens einen Teilstromes (16) durch die Membranfiltrationsvorrichtung (18) und/oder die Durchflussregelstellung oder Öffnungsstellung des mindestens einen Durchflussregulierungsmittels (20) über einen Zeitraum protokolliert wird.

15. Verfahren nach Anspruch 14, **dadurch gekennzeichnet, dass** bei einer Detektion einer verfahrensatypischen Änderung der überwachten Durchflussrate des wenigstens einen Teilstromes (16), oder bei Erfassung einer verfahrensatypischen Änderung der Durchflussregelstellung oder Öffnungsstellung des mindestens einen Durchflussregulierungsmittels (20), eine Maßnahme durchgeführt wird.

16. Verfahren nach Anspruch 15, **dadurch gekennzeichnet, dass** der Behandlungsflüssigkeit (4) als Maßnahme zumindest eine Chemikalie ausgewählt aus der Menge der pH-Regulatoren, Enthärtungsmittel, Korriosionsinhibitoren, Tensiden und antimikrobiell wirksamen Substanzen beigemengt wird.

17. Verfahren nach einem der Ansprüche 14 bis 16, **dadurch gekennzeichnet, dass** als Maßnahme eine Instandsetzung an der Reinigungsvorrichtung (17) oder der Pasteurisierungsanlage (1) durchgeführt wird.

18. Verfahren nach einem der vorhergehenden Ansprüche, **dadurch gekennzeichnet, dass** die Lebensmittel in den Behältnissen (6) in einer Behandlungszone (2) erwärmt oder in mehreren Behandlungszonen (2) sukzessive erwärmt werden, nachfolgend in einer Behandlungszone (2) oder mehreren Behandlungszonen (2) pasteurisiert werden, und darauf folgend in einer Behandlungszone (2) abgekühlt oder in mehreren Behandlungszonen (2) sukzessive abgekühlt werden.

19. Verfahren nach Anspruch 18, **dadurch gekennzeichnet, dass** der wenigstens eine Teilstrom (16) aus einem Umlaufkreislauf (11) entnommen wird, in welchem der Strom der Behandlungsflüssigkeit (4) ein Temperaturniveau zwischen 20 und 60 °C aufweist.

20. Verfahren nach einem der vorhergehenden Ansprüche, **dadurch gekennzeichnet, dass** bedarfsabhängig ein Teilvolumenstrom der Behandlungsflüssigkeit (4) durch einen Wärmetauscher (37) einer Kühlvorrichtung (36) geleitet wird.

## Claims

1. A method for operating a pasteurizing plant (1), comprising
transporting closed containers (6) filled with foods through one or multiple treatment zone(s) (2),
treating the containers (6) with a tempered, aqueous treatment liquid (4) in the treatment zone(s) (2) by applying the treatment liquid (4) to an outer surface (24) of the containers (6),
wherein the treatment liquid (4) is fed back to a treatment zone (2) from the treatment zone(s) (2) for reuse in at least one circulation loop (11) by means of a conveying means (12),
and wherein per time unit, a partial quantity of a volume flow of the treatment liquid (4) fed through the at least one circulation loop (11) is removed to create at least one partial flow (16)
which at least one partial flow (16) is fed through a cleaning device (17) fluidically line-connected with the at least one circulation loop (11), said cleaning device (17) comprising a membrane filtration device (18) with one or multiple filter module(s) (24) and is filtered,
**characterized in that**
a flow rate of the at least one partial flow (16) is continuously monitored by the membrane filtration system (18) by means of a sensor device (19),
and **in that**, on the basis of the monitoring, the partial quantity of treatment liquid (4) removed per time unit from the at least one circulation loop (11) is influenced with respect to a desired flow rate of the at least one partial flow (16) through the membrane filtration device (18), by adjusting a flow controlling position of at least one adjustable flow regulating means (20) relative to the membrane filtration device (18),
wherein, after being passed through the cleaning device (17), the at least one partial flow (16) is fed back into an circulation loop (11) or a treatment zone (2).

2. The method according to claim 1, **characterized in that** the desired flow rate for the at least one partial flow (16) through the membrane filtration device (18) is selected from a range between 0.1 % and 50 % relative to the volume flow of the treatment liquid (4) in the at least one circulation loop (11) before removing the partial flow (16).

3. The method according to claim 1 or 2, **characterized in that** the partial quantity of treatment liquid (4) removed per time unit from the at least one circulation loop (11) is influenced with respect to a desired flow rate of the at least one partial flow (16) through the membrane filtration device (18), by adjusting an opening of the at least one flow regulating means (20) relative to the membrane filtration device (18).

4. The method according to one of the preceding claims, **characterized in that** a flow controlling position or opening position of the at least one adjustable flow regulating means (20) relative to the membrane filtration device (18) is continuously monitored.

5. The method according to claim 4, **characterized in that**, if a threshold value for the flow controlling position or opening position of the at least one flow regulating means (20) is exceeded, a measure is taken.

6. The method according to one of the preceding claims, **characterized in that**, if there is a drop below a threshold value for the monitored flow rate of the at least one removed partial flow (16) by the membrane filtration device (18), a measure is taken.

7. The method according to claim 5 or 6, **characterized in that** the measure taken is a backwash by reversal of the direction of flow of a filter module or multiple or all filter modules (24) of the membrane filtration device (18).

8. The method according to one of the preceding claims, **characterized in that** the flow rate of the removed partial flow (16) is monitored by means of a sensor device (19) comprising a flow rate sensor (22).

9. The method according to one of the preceding claims, **characterized in that** a loss of pressure over the membrane filtration device (18) is continuously monitored by means of a sensor device (19) comprising a differential pressure sensor (23) or at least two pressure sensors.

10. The method according to one of the preceding claims, **characterized in that** a flow rate of the treatment liquid (4) through individual filter modules (24) or groups of filter modules (24) of the membrane filtration device (18) is continuously monitored by means of one sensor device (19) each, wherein the flow rates through the individual filter modules (24) or groups of filter modules (24) add up to a total flow rate over the membrane filtration device (18).

11. The method according to claim 10, **characterized in that**, if there is a drop below a respectively determined threshold value for a flow rate through an individual filter module (24) or a group of filter modules (24), the corresponding individual filter module (24) or the corresponding group of filter modules (24) is backwashed by reversal of the direction of flow.

12. The method according to one of the preceding claims, **characterized in that** the filter module(s) (24) of the membrane filtration device (18) are acted upon by a gas flow cyclically or as needed on the retentate side.

13. The method according to claim 12, **characterized in that** the filter module(s) (24) of the membrane filtration device (18) are acted upon by a gas flow on the retentate side during a backwash process.

14. The method according to one of the preceding claims, **characterized in that** the flow rate of the at least one partial flow (16) through the membrane filtration device (18) and/or the flow controlling position or opening position of the at least one flow regulating means (20) is logged over a period of time.

15. The method according to claim 14, **characterized in that**, if a change, atypical for the method, of the monitored flow rate of the at least one partial flow (16) is detected, or if a change, atypical for the method, of the flow controlling position or opening position of the at least one flow regulating means (20) is registered, a measure is taken.

16. The method according to claim 15, **characterized in that**, as a measure, at least one chemical selected from the group of pH regulators, softeners, corrosion inhibitors, tensides and substances with an antimicrobial effect are added to the treatment liquid (4).

17. The method according to one of claims 14 to 16, **characterized in that**, as a measure, a repair is carried out on the cleaning device (17) or the pasteurizing plant (1).

18. The method according to one of the preceding claims, **characterized in that** the foods in the containers (6) are heated in one treatment zone (2) or successively heated in multiple treatment zones (2), subsequently pasteurized in one treatment zone (2) or multiple treatment zones (2), and, following this, cooled in one treatment zone (2) or successively cooled in multiple treatment zones (2).

19. The method according to claim 18, **characterized in that** the at least one partial flow (16) is removed from a circulation loop (11) in which the flow of the treatment liquid (4) has a temperature level between 20 and 60 °C.

20. The method according to one of the preceding claims, **characterized in that** a partial volume flow of the treatment liquid (4) is led through a heat exchanger (37) of a cooling device (36) as needed.

## Revendications

1. Procédé pour le contrôle d'une installation de pasteurisation (1), comprenant
le transport de récipients (6) remplis de produits alimentaires et fermés à travers une ou plusieurs zones de traitement (2),
le traitement des récipients (6) avec un liquide de traitement (4) tempéré aqueux dans le ou les zones de traitement (2) par l'application du liquide de traitement (4) sur un côté externe (24) des récipients (6),
dans lequel le liquide de traitement (4) est retourné de la ou des zones de traitement (2) pour une réutilisation dans au moins un circuit de recirculation (11) au moyen d'un moyen de convoyage (12) vers une zone de traitement (2),
et dans lequel une quantité partielle d'un flux volumique par unité de temps, guidé sur au moins un circuit de recirculation (11), du liquide de traitement (4) est prélevée pour la formation d'au moins un flux partiel (16),
cet au moins un flux partiel (16) étant guidé et filtré par au moins un dispositif de nettoyage (17) relié en écoulement par une conduite avec l'au moins un circuit de recirculation (11), comprenant un dispositif de filtration par membrane (18) avec un ou plusieurs modules de filtration (24),
**caractérisé en ce que**
de manière continue, un débit de l'au moins un flux partiel (16) à travers le dispositif de filtration par membrane (18) est surveillé au moyen d'un dispositif de capteur (19),
et, sur la base de la surveillance, la quantité partielle de liquide de traitement (4), prélevée par unité de temps dans l'au moins un circuit de recirculation (11) est contrôlée en fonction d'un débit souhaité de l'au moins un flux partiel (16) à travers le dispositif de filtration par membrane (18), par le réglage d'une position de régulation du débit d'au moins un moyen de régulation du débit (20) réglable par rapport au dispositif de filtration par membrane (18),
dans lequel l'au moins un flux partiel (16) est retourné, après la traversée du dispositif de nettoyage (17), vers un circuit de recirculation (11) ou vers une zone de traitement (2).

2. Procédé selon la revendication 1, **caractérisé en ce qu'**un débit souhaité pour l'au moins un flux partiel (16) à travers le dispositif de filtration par membrane (18) est sélectionné dans un intervalle entre 0,1 % et 50 % du flux volumique du liquide de traitement (4) dans l'au moins un circuit de recirculation (11) avant le prélèvement du flux partiel (16).

3. Procédé selon la revendication 1 ou 2, **caractérisé en ce que** la quantité partielle de liquide de traitement (4), prélevée par unité de temps dans l'au moins un circuit de recirculation (11), est contrôlée en fonction d'un débit souhaité de l'au moins un flux partiel (16) à travers le dispositif de filtration par membrane (18) par le réglage d'une ouverture de l'au moins un moyen de régulation du débit (20) par rapport au dispositif de filtration par membrane (18).

4. Procédé selon l'une des revendications précédentes, **caractérisé en ce qu'**une position de régulation du débit ou la position d'ouverture de l'au moins un moyen de régulation du débit (20) réglable par rapport au dispositif de filtration par membrane (18) est surveillée en continu.

5. Procédé selon la revendication 4, **caractérisé en ce que**, lors du dépassement d'une valeur limite pour la position de régulation du débit ou la position d'ouverture de l'au moins un moyen de régulation du débit (20), une mesure est appliquée.

6. Procédé selon l'une des revendications précédentes, **caractérisé en ce que**, lors du dépassement d'une valeur limite pour le débit surveillé de l'au moins un flux partiel (16) prélevé à travers le dispositif de filtration par membrane (18), une mesure est appliquée.

7. Procédé selon la revendication 5 ou 6, **caractérisé en ce que** la mesure appliquée est un rinçage à contre-courant par l'inversion d'une direction du flux d'un module de filtration ou de plusieurs ou de tous les modules de filtration (24) du dispositif de filtration par membrane (18).

8. Procédé selon l'une des revendications précédentes, **caractérisé en ce que** le débit du flux partiel (16) prélevé est surveillé au moyen d'un dispositif de capteur (19) comprenant un capteur de débit (22).

9. Procédé selon l'une des revendications précédentes, **caractérisé en ce qu'**une chute de pression dans le dispositif de filtration par membrane (18) est surveillée en continu au moyen d'un dispositif de capteur (19) comprenant un capteur de pression différentielle (23) ou au moins deux capteurs de pression.

10. Procédé selon l'une des revendications précédentes, **caractérisé en ce que**, de manière continue, au moyen d'un dispositif de capteur (19), un débit du liquide de traitement (4) à travers différents modules de filtration (24) ou de groupes de modules de filtration (24) du dispositif de filtration par membrane (18) est surveillé, dans lequel les débits à travers les différents modules de filtration (24) ou groupe de modules de filtration (24) s'ajoutent afin d'obtenir un débit total dans le dispositif de filtration par membrane (18).

11. Procédé selon la revendication 10, **caractérisé en ce que**, lors d'un passage en dessous d'une valeur limite définie pour un débit à travers un module de filtration (24) individuel ou un groupe de modules de filtration (24), le module de filtration (24) individuel correspondant ou le groupe correspondant de modules de filtration (24) sont rincés à contre-courant par inversion de la direction du flux.

12. Procédé selon l'une des revendications précédentes, **caractérisé en ce que** le ou les modules de filtration (24) du dispositif de filtration par membrane (18) sont alimentés, côté rétentat, de manière cyclique ou selon les besoins, avec un flux de gaz.

13. Procédé selon la revendication 12, **caractérisé en ce que** le ou les modules de filtration (24) du dispositif de filtration par membrane (18) sont alimentés, pendant un processus de rinçage à contre-courant, côté rétentat, avec un flux de gaz.

14. Procédé selon l'une des revendications précédentes, **caractérisé en ce que** le débit de l'au moins un flux partiel (16) à travers le dispositif de filtration par membrane (18) et/ou la position de régulation du débit ou la position d'ouverture de l'au moins un moyen de régulation du débit (20) est enregistré sur une période.

15. Procédé selon la revendication 14, **caractérisé en ce que**, lors d'une détection d'une variation typique du procédé du débit surveillé de l'au moins un flux partiel (16) ou lors de la détection d'une variation typique du procédé de la position de régulation du débit ou de la position d'ouverture de l'au moins un moyen de régulation du débit (20), une mesure est appliquée.

16. Procédé selon la revendication 15, **caractérisé en ce que**, en tant que mesure, au liquide de traitement (4) est ajouté au moins un produit chimique sélectionné parmi des régulateurs de pH, des produits adoucissants, des inhibiteurs de corrosion, des tensio-actifs et des substances antimicrobiennes.

17. Procédé selon l'une des revendications 14 à 16, **caractérisé en ce que**, en tant que mesure, une remise en état est effectuée sur le dispositif de nettoyage (17) ou sur l'installation de pasteurisation (1).

18. Procédé selon l'une des revendications précédentes, **caractérisé en ce que** les produits alimentaires dans les récipients (6) sont chauffés dans une zone de traitement (2) ou sont chauffés successivement dans plusieurs zones de traitement (2) puis sont pasteurisés dans une zone de traitement (2) ou plusieurs zones de traitement (2) et ensuite refroidis dans une zone de traitement (2) ou refroidis successivement dans plusieurs zones de traitement (2).

19. Procédé selon la revendication 18, **caractérisé en ce que** l'au moins un flux partiel (16) est prélevé dans un circuit de recirculation (11) dans lequel le flux de liquide de traitement (4) présente un niveau de température entre 20 et 60 °C.

20. Procédé selon l'une des revendications précédentes, **caractérisé en ce que**, selon les besoins, un flux volumique partiel du liquide de traitement (4) est conduit à travers un échangeur thermique (37) d'un dispositif de refroidissement (36).
